# EUROPÄISCHE PATENTSCHRIFT

(11) **EP 0 544 690 B1**
(45) Veröffentlichungstag und Bekanntmachung des Hinweises auf die Patenterteilung: **28.09.1994**
(21) Anmeldenummer: 91912943.7
(22) Anmeldetag: 16.07.1991
(51) Int. Cl.: A47J 31/46, A47J 31/06

(54) **ESPRESSOMASCHINE**
ESPRESSO COFFEE MACHINE
MACHINE A CAFE EXPRESS

(30) Priorität: 22.08.1990 DE 4026495
(43) Veröffentlichungstag der Anmeldung: 09.06.1993
(73) Patentinhaber: Braun Aktiengesellschaft, Frankfurt am Main (DE)
(72) Erfinder: HUFNAGL, Walter, D-6232 Sulzbach/Ts. (DE)
(86) Internationale Anmeldenummer: DE9100594
(87) Internationale Veröffentlichungsnummer: WO9203081

(56) Entgegenhaltungen:
- EP-A- 0 313 496
- CH-A- 350 778
- US-A- 2 451 195

## Beschreibung

Die Erfindung betrifft eine Espressomaschine mit einem elektrisch beheizbaren Wassererhitzer, mit einer Siebkorbhalteeinrichtung, die durch Einsetzen eines Siebkorbträgers dichtend verschlossen werden kann, wobei der Siebkorbträger durch ein Sieb in eine mit Kaffeemehl füllbare Brühkammer und in eine an seinem Boden angeordnete Ausgießeinrichtung aufgeteilt ist und wobei die Brühkammer mit dem Wassererhitzer über eine in die Siebkorbhalteeinrichtung mündende erste Leitung verbindbar ist, in der ein die Durchflußsteuerung regelndes Ventil angeordnet ist, das bei nicht eingesetztem Siebkorbträger stets geschlossen ist, wobei nach Einsetzen des Siebkorbträgers dieser bewirkt, daß das Ventil von seiner Schließstellung in seine Offenstellung gelangt, wobei zwischen dem Siebkorbträger und dem Ventil ein erstes Betätigungsglied ausgebildet ist, welches vom Siebkorbträger zur Steuerung des Ventils betätigt wird, und wobei der Espressomaschine über eine mit einem Dampfauslaß versehene zweite Leitung zur Erwärmung und Aufschäumung von Getränken Dampf entnommen werden kann, wobei auch der Dampf im Wassererhitzer erzeugt wird.

Eine derartige Espressomaschine ist bereits aus der DE-C 37 33 87 bekannt, bei der ein die Durchflußsteuerung regelndes Ventil angeordnet ist, welches bei nicht eingesetztem Siebkorbträger stets geschlossen ist und welches nach Einsetzen des Siebkorbträgers durch diesen in seine Offenstellung gelangt. Zwischen dem Siebkorbträger und dem Ventil ist ein erstes Betätigungsglied ausgebildet, welches vom Siebkorbträger zur Steuerung des Ventils betätigt wird. Durch das erste, unabhängig vom Siebkorbträger in der Siebkorbhalteeinrichtung ausgebildete Betätigungsglied wird eine mechanische Verbindung vom Siebkorbträger zum Ventil hergestellt. Hierdurch wird eine Sicherheitseinrichtung geschaffen, die es ermöglicht, daß erst dann, wenn der Siebkorbträger in der Siebkorbhalteeinrichtung ordnungsgemäß eingesetzt ist, heißes Wasser aus der Siebkorbhalteeinrichtung austreten und in die Brühkammer des Siebkorbträgers eintreten kann, von wo es dann nach dem Aufbrühen des Espressopulvers als Espresso das Sieb durchströmt und über die Ausgießeinrichtung den Siebkorbträger verläßt, von wo es dann letztendlich in eine unterhalb des Siebkorbträgers positionierte Tasse gelangt.

Eine derartige Sicherheitseinrichtung ist sowohl auf pumpenbetriebene wie auch dampfkesselbetriebene Espressomaschinen anwendbar. Ein nach allen Richtungen aus der Siebkorbhalteeinrichtung ausströmender Dampf bzw. heißes Wasser, was auch sehr oft unter einem explosionsartigen Verpuffungsvorgang abläuft, wird durch das Ventil vermieden, so daß ein unbeabsichtigtes Verbleiben einer Hand im Bereich unterhalb der Siebkorbhalteeinrichtung nicht mehr zu unangenehmen Verbrennungen führen kann.

Aufgabe der Erfindung ist es daher, eine Espressomaschine, die sowohl heißes Wasser zum Herstellen eines Espressos, wie Dampf zum Aufwärmen bzw. zum Aufschäumen von Getränken ermöglicht, derart zu verbessern, daß aus dem Siebkorbträger erst dann Brühwasser bzw. überhitzter Dampf austreten kann, wenn dieser ordnungsgemäß in der Siebkorbhalteeinrichtung eingesetzt ist und wenn gleichzeitig der Dampfbetrieb ausgeschaltet ist.

Diese Aufgabe wird erfindungsgemäß dadurch gelöst, daß zusätzlich zum ersten Betätigungsglied ein zweites, ebenfalls zur Steuerung des Ventils dienendes Betätigungsglied vorhanden ist und daß das Ventil sich nur öffnet, wenn sowohl das erste als auch das zweite Betätigungsglied in ihrer Offenstellung stehen. Der für eine dampfkesselbetriebene Espressomaschine zusätzlich zum ersten Hebel auf das Ventil einwirkende zweite Hebel läßt ein Öffnen des Ventils, obwohl der erste Hebel vom Siebkorbträger in seine das Ventil öffnende Stellung gebracht wurde, erst dann zu, wenn er ebenfalls in seine das Ventil öffnende Stellung gebracht wurde. Ist also der Siebkorbträger in die Siebkorbhalteeinrichtung überhaupt nicht eingesetzt, so kann auch der erste Hebel nicht vom Siebkorbträger betätigt werden und der zweite Hebel, auch wenn er sich in seiner Offenstellung befindet, kann auch nicht die Öffnung des Ventils bewirken, da der erste Hebel das Ventil auch dann, wenn der zweite Hebel in seiner Offenstellung das Ventil freigibt, dieses immer noch verschlossen hält. In Schließstellung des Ventils kann also kein Dampf aus der Siebkorbhalteeinrichtung ausströmen, sondern es kann nur Dampf zu der zum Herstellen von Cappuccino dienenden Dampfauslaßöffnung strömen, allerdings auch dann nur, wenn das zusätzlich an der zweiten Leitung ausgebildete Dampfventil geöffnet ist.

Da der Dampfdruck und somit die Temperatur im Dampferhitzer durch einen Thermostaten geregelt wird, kann auch bei geschlossenem Dampfventil und Ventil kein unzulässig hoher Dampfdruck im Dampfkessel entstehen. Sollte dies tatsächlich einmal eintreten, so ist an dem den Dampfkessel verschließenden Deckel als Sicherheit ein Überdruckventil ausgebildet, über das dann der überhöhte Druck in die Atmosphäre abgegeben wird.

Es ist besonders vorteilhaft, daß das Einsetzen des Siebkorbträgers durch eine zur Siebkorbhalteeinrichtung hin gerichtete axiale Verschiebung erfolgt, daß das erste Betätigungsglied von einem Kipphebel gebildet wird, dessen eines Ende durch die beim Verschließen der Siebkorbhalteeinrichtung durch den Siebkorbträger auftretende axiale Verschiebung derart um seinen Lagerpunkt geschwenkt wird, daß dabei ein am Kipphebel ausgebildetes Betätigungselement das Ventil öffnet. Bei dieser Ausführungsform wird also die bei der Verriegelung des Siebkorbträgers an der Siebkorbhalteeinrichtung auftretende axiale Verschiebung zum Betätigen des Ventils ausgenutzt. Die axiale Verschiebung kann beispielsweise beim Befestigen des Siebkorbträgers durch eine Gewinde- oder Rampeneinrichtung zwischen dem Siebkorbträger und der Siebkorbhalteeinrichtung erzeugt werden. Es sind aber auch andere Befestigungsmöglichkeiten denkbar, nur muß sich dabei eine axiale Verschiebung beim Befestigen und Dichten des Siebkorbträgers in der Siebkorbhalteeinrichtung ergeben.

Vorteilhaft erfolgt das Einsetzen des Siebkorbträgers dadurch, daß er mittels Vorsprünge in ein Gewinde oder in einen Bajonettverschluß eingedreht wird, daß das erste Betätigungsglied von einem um eine Achse drehbaren ersten Hebel gebildet wird, dessen freies Ende durch die Schließbewegung des Siebkorbträgers derart um seine Achse gedreht wird, daß dabei ein am ersten Hebel ausgebildetes erstes Betätigungselement das Ventil öffnet. Eine derartige Ventilbetätigung läßt sich bei den herkömmlichen Espressomaschinen besonders einfach realisieren, da der Siebkorbträger in der Regel durch einen Bajonettverschluß, der ein schnelles Einsetzen und Verriegeln des Siebkorbträgers ermöglicht, mit der Siebkorbhalteeinrichtung verbunden wird, so daß sich automatisch eine Drehbewegung ergibt; diese wird dann direkt auf den ersten Hebel übertragen, so daß auch dieser dann einer Drehbewegung folgt.

Ein Drehhebel hat weiterhin den Vorteil, daß auch bei größeren Drehwinkeln am Siebkorbträger und somit auch am ersten Hebel dennoch geringe Ventilkolbenwege zurückgelegt werden können. Durch große Drehwinkel am ersten Hebel kann nämlich eine Bedienungsperson die Stellung des ersten Hebels - ob er in der das Ventil öffnenden bzw. schließenden Stellung steht - auch deutlich von Weitem erkennen. Das erste Betätigungsglied kann aber beispielsweise auch ein vom Siebkorbträger beaufschlagbarer elektrischer Schalter sein, der ein das Ventil betätigenden Elektromagneten steuert. Dies wäre dann, anstelle einer rein mechanischen eine elektromechanische Lösung, die aber in dieser Erfindung nicht weiterverfolgt wird.

In einer Weiterbildung der Erfindung ist vorgesehen, daß das freie Ende des ersten Hebels in eine beim Ansetzen des Siebkorbträgers an ihm ausgebildete Ausnehmung eingreift. Durch diese Zwangsführung des freien Endes des ersten Hebels am Siebkorbträger wird stets sichergestellt, daß beim Verdrehen des Siebkorbträgers, sei es in die Entnahmestellung oder in die Schließstellung, der erste Hebel wirklich entsprechend der Verdrehung des Siebkorbträgers mitgedreht wird.

In einer anderen Ausführungsform wird der erste Hebel, beispielsweise vom Siebkorb, nur in Richtung der Verschließstellung mitgenommen. Dabei ist es dann vorteilhaft, wenn an dem ersten Hebel eine Feder angreift, die den ersten Hebel in seine das Ventil schließende Ausgangsstellung selbsttätig zurückbewegt, wenn der Siebkorbträger von der Siebkorbhalteeinrichtung gelöst wird. Auch bei einer Zwangsführung des Hebels, wie oben beschrieben, kann eine den Hebel in seine Ausgangsstellung bringende Feder von Vorteil sein, damit der Hebel nicht bei auf die Espressomaschine einwirkenden Erschütterungen in eine Mittellage gelangt, so daß ein Eingreifen des freien Endes des Hebels in die Ausnehmung nicht mehr möglich wäre.

Es ist vorteilhaft, daß das Ventil von einem im Gehäuse der Siebkorbhalteeinrichtung axial verschiebbaren Ventilkolben und von einem vom Ventilkolben öffnenden bzw. schließenden Ventilsitz gebildet wird, daß der Ventilkolben von einer Feder zum Zwecke des selbsttätigen Öffnen des Ventils beaufschlagt ist, daß der Ventilkolben mit seinem freien Ende aus dem Gehäuse der Siebkorbhalteeinrichtung herausragt und gegenüber dem Gehäuse gedichtet ist, daß bei geschlossenem Ventil das am ersten Hebel ausgebildete erste Betätigungselement am freien Ende des Kolbens anliegt und diesen gegen den Ventilsitz in das Gehäuse der Siebkorbhalteeinrichtung drückt, während zur Öffnung des Ventils das freie Ende des ersten Hebels durch den Siebkorbträger derart verdreht wird, daß das erste Betätigungselement aus dem Wirkungsbereich des Ventilkolbens gelangt und dabei der Ventilkolben vom Ventilsitz abhebt. Bei dieser Ventileinrichtung muß also das Betätigungselement des ersten Hebels ständig auf das freie Ende des Ventilkolbens drücken, um diesen dichtend gegen den Ventilsitz zu drücken, wodurch der Zufluß der Leitung in die Brühkammer unterbrochen ist. Sobald das Betätigungselement des ersten Hebels den Ventilkolben freigibt, hebt der Ventilkolben unter Wirkung der Federkraft vom Ventilsitz ab und gibt den Durchfluß von der ersten Leitung zu der im Siebkorbträger ausgebildeten Brühkammer frei, so daß ein Espressogetränk hergestellt werden kann.

Ein langsames Öffnen bzw. Schließen des Ventils wird in vorteilhafter Weise dadurch erreicht, daß der an dem freien Ende des Ventilkolbens zugewandte Bereich des Betätigungselementes am ersten Hebel eine als erste Rampe ausgebildete Gleitbahn ist und daß die erste Rampe in Schließrichtung des Siebkorbträgers ihren Abstand zum freien Ende des Ventilkolbens vergrößert. Je nachdem, wie groß die Steigung der ersten Rampe gewählt wird, kann das Ventil in Abhängigkeit des Drehwinkels des ersten Hebels schnell oder langsamer geöffnet bzw. geschlossen werden.

Damit der durch die Kraft der Feder in Öffnungsrichtung beaufschlagte Ventilkolben nicht den ersten Hebel in seine das Ventil freigebende Offenstellung verdreht, ohne daß dabei eine Bedienungsperson den ersten Hebel betätigt hat, und damit gleichzeitig der Ventilkolben in seiner Offenstellung nicht aus seiner Führungsbohrung herausspringt, ist in einer Weiterbildung der Erfindung vorgesehen, daß sich an die erste Rampe zu beiden Selten eine senkrecht zur Längsachse des Ventilkolbens verlaufende Gleitbahn in Form von Anschlagflächen anschließt und daß die beiden horizontal verlaufenden Anschlagflächen innerhalb des Schließwinkels des Siebkorbträgers liegen. Die Längsachse des Ventilkolbens kann in gewissem Maße geneigt zu der Gleitbahn verlaufen; wichtig ist dabei nur, daß beim Eingreifen der Gleitbahn auf den Ventilkolben dieser immer noch in seine Schließ- bzw. Offenstellung gelangt.

Eine besonders einfache und kostengünstige Anordnung der Ventileinrichtung ergibt sich dadurch, daß der erste Hebel im wesentlichen senkrecht zur Längsachse des Ventilkolbens und der Achse des ersten Hebels verläuft, daß das zum Siebkorbträger verlaufende freie Ende des ersten Hebels gegenüber dem horizontal verlaufenden Bereich des ersten Hebels abgewinkelt ist und sich parallel zur Längsachse des Kolbens und der Achse des ersten Hebels erstreckt und daß das freie Ende mit einem am Siebkorbträger ausgebildeten Anschlag in Wirkverbindung bringbar ist, der radial außerhalb einer an der Siebkorbhalteeinrichtung ausgebildeten Dichtverbindung am Siebkorbträger angeordnet ist. Hierdurch entsteht eine besonders einfache und leichte Montage und vermeidet unerwünschte Querkräfte an den beweglichen Teilen. Gleichzeitig wird durch die direkte Kraftumsetzung eine besonders leichtgängige und dauerhafte Ventileinrichtung geschaffen.

Ohne am Siebkorbträger irgendwelche Änderungen gegenüber dem Serienstand vornehmen zu müssen, ist die Hebeleinrichtung so ausgebildet, daß der Siebkorbträger mit der Siebkorbhalteeinrichtung durch einen Bajonettverschluß verbindbar ist und daß das siebkorbhalterseitige Bajonettverschlußteil den Anschlag für das freie Ende des ersten Hebels bildet.
eine senkrecht zur Längsachse des Ventilkolbens verlaufende Gleitbahn in Form von Anschlagflächen anschließt und daß die beiden horizontal verlaufenden Anschlagflächen innerhalb des Schließwinkels des Siebkorbträgers liegen. Die Längsachse des Ventilkolbens kann in gewissem Maße geneigt zu der Gleitbahn verlaufen; wichtig ist dabei nur, daß beim Eingreifen der Gleitbahn auf den Ventilkolben dieser immer noch in seine Schließ- bzw. Offenstellung gelangt.

Eine besonders einfache und kostengünstige Anordnung der Ventileinrichtung ergibt sich dadurch, daß der erste Hebel im wesentlichen senkrecht zur Längsachse des Ventilkolbens und der Achse des ersten Hebels verläuft, daß das zum Siebkorbträger verlaufende freie Ende des ersten Hebels gegenüber dem horizontal verlaufenden Bereich des ersten Hebels abgewinkelt ist und sich parallel zur Längsachse des Kolbens und der Achse des ersten Hebels erstreckt und daß das freie Ende mit einem am Siebkorbträger ausgebildeten Anschlag in Wirkverbindung bringbar ist, der radial außerhalb einer an der Siebkorbhalteeinrichtung ausgebildeten Dichtverbindung am Siebkorbträger angeordnet ist. Hierdurch entsteht eine besonders einfache und leichte Montage und vermeidet unerwünschte Querkräfte an den beweglichen Teilen. Gleichzeitig wird durch die direkte Kraftumsetzung eine besonders leichtgängige und dauerhafte Ventileinrichtung geschaffen.

Ohne am Siebkorbträger irgendwelche Änderungen gegenüber dem Serienstand vornehmen zu müssen, ist die Hebeleinrichtung so ausgebildet, daß der Siebkorbträger mit der Siebkorbhalteeinrichtung durch einen Bajonettverschluß verbindbar ist und daß das siebkorbhalterseitige Bajonettverschlußteil den Anschlag für das freie Ende des ersten Hebels bildet.

Da bei den heutigen dampfkesselbetriebenen Espressomaschinen auch Dampf erzeugt wird, der für die zusätzliche Zubereitung von Cappuccino nahezu unerläßlich ist, wird in einer Weiterbildung der Erfindung vorgeschlagen, daß der Espressomaschine über eine mit einem Dampfauslaß versehene zweite Leitung zur Erwärmung und Aufschäumung von Getränken Dampf entnommen werden kann, wobei auch der Dampf im Wassererhitzer erzeugt wird, daß zusätzlich zum ersten Betätigungsglied ein zweites, ebenfalls zur Steuerung des Ventils dienendes Betätigungsglied vorhanden ist und daß das Ventil sich nur öffnet, wenn sowohl das erste als auch das zweite Betätigungsglied in ihrer Offenstellung stehen.

Der für eine dampfkesselbetriebene Espressomaschine zusätzlich zum ersten Hebel auf das Ventil einwirkende zweite Hebel läßt ein Öffnen des Ventils, obwohl der erste Hebel vom Siebkorbträger in seine das Ventil öffnende Stellung gebracht wurde, erst dann zu, wenn er ebenfalls in seine das Ventil öffnende Stellung gebracht wurde. Ist also der Siebkorbträger in die Siebkorbhalteeinrichtung überhaupt nicht eingesetzt, so kann auch der erste Hebel nicht vom Siebkorbträger betätigt werden und der zweite Hebel, auch wenn er sich in seiner Offenstellung befindet, kann auch nicht die Öffnung des Ventils bewirken, da der erste Hebel das Ventil auch dann, wenn der zweite Hebel in seiner Offenstellung das Ventil freigibt, dieses immer noch verschlossen hält. In Schließstellung des Ventils kann also kein Dampf aus der Siebkorbhalteeinrichtung ausströmen, sondern es kann nur Dampf zu der zum Herstellen von Cappuccino dienenden Dampfauslaßöffnung strömen, allerdings auch dann nur, wenn das zusätzlich an der zweiten Leitung ausgebildete Dampfventil geöffnet ist.

Da der Dampfdruck und somit die Temperatur im Dampferhitzer durch einen Thermostaten geregelt wird, kann auch bei geschlossenem Dampfventil und Ventil kein unzulässig hoher Dampfdruck im Dampfkessel entstehen. Sollte dies tatsächlich einmal eintreten, so ist an dem den Dampfkessel verschließenden Deckel als Sicherheit ein Überdruckventil ausgebildet, über das dann der überhöhte Druck in die Atmosphäre abgegeben wird.

Bei denjenigen pumpenbetriebenen Espressomaschinen, bei denen der Dampf in einem unabhängig vom Wasserhitzer ausgebildeten Dampferhitzer erzeugt wird und der nur dann Dampf erzeugt, wenn Wasser über ein mit dem Wassertank verbundenes Tropfventil in den Dampferzeuger fließt, von wo es dann als Dampf über die zweite Leitung, die mit der ersten Leitung nicht verbunden ist, zum Dampfauslaß strömt, wird ein zweites Betätigungsglied nach der Erfindung nicht benötigt. Aus diesem Grunde sind alle Welterbildungen der Erfindung, die sich mit dem zweiten Hebel befassen, nur auf dampfkesselbetriebene Espressomaschinen anzuwenden.

Nach einer ersten Ausführungsvariante des Ventils nach der Erfindung weist das erste und zweite Betätigungsglied ein mit dem Ventil in Kontakt bringbares erstes bzw. zweites Betätigungselement auf, wobei das Einsetzen des Siebkorbträgers dadurch erfolgt, daß er mittels Vorsprünge in ein Gewinde oder in einen Bajonettverschluß eindrehbar ist, wobei das erste und zweite Betätigungsglied von einem um eine erste Achse drehbaren ersten und zweiten Hebel gebildet wird, wobei das Ventil von einem im Gehäuse der Siebkorbhalteeinrichtung axial verschiebbaren Ventilkolben und von einem vom Ventilkolben öffnenden bzw. schließenden Ventilsitz gebildet wird, wobei der Ventilkolben von einer Feder zum Zwecke des selbsttätigen Öffnens des Ventils beaufschlagt ist, wobei der Ventilkolben an seinem freien Ende von je einem am ersten und zweiten Hebel ausgebildeten ersten und zweiten Betätigungselement beaufschlagbar ist, wobei das Ventil gegenüber dem Gehäuse gedichtet ist, wobei bei geschlossenem Ventil das erste und/oder das zweite Betätigungselement am freien Ende des Ventilkolbens mit Vorspannung anliegend, während sich zur Öffnung des Ventils das erste und zweite Betätigungselement außerhalb des Wirkungsbereiches des freien Endes des Ventilkolbens befinden, indem das freie Ende des ersten Hebels durch den Siebkorbträger verdreht wird und indem das zweite Betätigungselement durch Verdrehung von Hand ebenfalls aus dem Wirkungsbereich des Ventilkolbens gelangt.

Bei dieser Ventileinrichtung wird der Ventilkolben zum Verschließen des Ventils vom ersten und/oder zweiten Betätigungselement gegen die Vorspannkraft der Feder in das Gehäuse gedrückt. Sobald beide Betätigungselemente aus dem Wirkungsbereich des Ventilkolbens gelangen, d. h., ihn nicht mehr in seiner Schließstellung halten, löst er sich selbsttätig durch die Vorspannkraft der Feder vom Dichtsitz und wandert ein Stück aus dem Gehäuse heraus. Dabei gibt er die Leitung frei, so daß Wasser aus dem Druckbehälter über die Leitung strömen kann und an der Siebkorbhalteeinrichtung austritt, wo es dann durch den Dampfkesseldruck in die mit Espressomehl gefüllte Brühkammer hineingepumpt wird.

Um eine Längsverschiebung des Ventilkolbens bei geringster Hebelkraft erreichen zu können und um zum Schließen des Ventils eine in das Gehäuse hineingerichtete Bewegung am Ventilkolben zu erreichen, sind an dem dem freien Ende des Ventilkolbens zugewandten Bereich sowohl am ersten wie am zweiten Betätigungselement eine als Rampe ausgebildete erste bzw. zweite Gleitbahn angeordnet, wobei sich der Abstand der ersten und zweiten Gleitbahn in Schließrichtung des Siebkorbträgers gegenüber dem freien Ende des Ventilkolbens vergrößert.

Damit in Schließstellung des Ventils möglichst beide Rampen mit gleicher Kraft am Ventilkolben anliegen und somit auch beim Herausdrehen eines Hebels der andere Hebel das Ventil weiterhin sicher verschließt, verlaufen die erste und zweite Rampe in Schließstellung des ersten und zweiten Hebels im wesentlichen in der gleichen Ebene und parallel zueinander.

Durch die Gleitsitzanordnung zwischen dem Ventilkolben und den Betätigungselementen lassen sich die Betätigungsglieder besonders leicht in der Siebkorbhalteeinrichtung montieren, da die Hebel lediglich auf ihren Achsen aufgeschoben und axial gesichert werden müssen. Ist dabei der zweite Hebel auf einer am ersten Hebel ausgebildeten zweiten Achse drehbar gelagert und verlaufen die als Gleitbahnen ausgebildeten Rampen des ersten und zweiten Hebels konzentrisch zueinander und, dem freien Ende des Ventilkolbens gegenüberliegend und von der Achse aus gesehen, radial hintereinander, so benötigt man zur Lagerung der Hebel nur eine Achse an der Siekorbhalteeinrichtung. Dabei sind die Gleitbahnen in Schließstellung des Ventils so gegenüber dem Ventilkolben angeordnet, daß das erste Betätigungselement, von der Achse aus gesehen, jenseits der Mittellinie des Ventilkolbens an seinem freien Ende anliegt, während das zweite Betätigungselement diesseits der Mittellinie des Ventilkolbens an seinem freien Ende anliegt.

Damit eine Bedienungsperson frei wählen kann, ob sie Dampf erzeugen will, um ein Getränk aufzuheizen und es gleichzeitig aufzuschäumen, oder ob sie heißes Wasser herstellen will, um einen Espresso zuzubereiten, ist es vorteilhaft, daß der zweite Hebel von Hand betätigbar ist.

Um die Bauhöhe der Ventileinrichtung und somit auch die Bauhöhe der Siebkorbhalteeinrichtung möglichst gering zu halten, ist es vorteilhaft, daß die erste Achse von einem Zapfen gebildet wird, auf der der erste Hebel über eine erste Bohrung gelagert ist und daß der erste Hebel an der Außenwandung der ersten Bohrung eine zylindrische Mantelfläche aufweist, auf der über eine am zweiten Hebel ausgebildete zweite Bohrung der zweite Hebel gelagert ist. Durch die Lagerung der beiden Betätigungsglieder auf nur einer Achse wird der Aufbau und die Montage der Ventileinrichtung besonders einfach.

In einer Weiterbildung der Erfindung wird vorgeschlagen, daß der erste Hebel oberhalb des zweiten Hebels auf der ersten Achse gelagert ist und daß außerhalb des zweiten Hebels im Bereich des Ventilkolbens am ersten Hebel ein das erste Betätigungselement bildender, zum Ventilkolben hin gerichteter erster Vorsprung ausgebildet ist, an dessen dem Ventilkolben zugewandter Stirnfläche die erste Rampe verläuft. Durch das Übergreifen des ersten Hebels über den zweiten Hebel kann sich der zweite Hebel über eine verhältnismäßig große Fläche am ersten Hebel in Öffnungsrichtung des Ventilkolbens abstützen, so daß evtl. auftretende Querkräfte nicht zum Verhaken des zweiten Hebels führen. Hierdurch wird es auch ermöglicht, daß das freie Ende des ersten Hebels gegenüber dem freien Ende des zweiten Hebels versetzt angeordnet werden kann, so daß eine leichte Anbindung zum Siebkorbträger hin möglich wird.

Damit der zweite Hebel zu seiner einfachen Bedienung an der Vorderseite der Espressomaschine ausgebildet werden kann und dieser nicht mit dem ersten Hebel kollidiert, ist es vorteilhaft, daß der Abstand zwischen der zweiten Rampe des zweiten Hebels und der ersten Achse geringer ist als der Abstand zwischen der ersten Rampe des ersten Hebels und der ersten Achse.

In einer zweiten Ausführungsform der Ventileinrichtung und der davon abhängigen Betätigungseinrichtung wird in vorteilhafter Weise vorgeschlagen, daß das erste und zweite Betätigungsglied ein das Ventil steuerndes erstes bzw. zweites Betätigungselement aufweist, daß das Einsetzen des Siebkorbträgers dadurch erfolgt, daß er mittels Vorsprünge in ein Gewinde oder einen Bajonettverschluß eingedreht wird, daß das erste und zweite Betätigungsglied von einem um eine Achse drehbaren ersten und zweiten Hebel gebildet wird, daß das Ventil von einem im Gehäuse der Siebkorbhalteeinrichtung axial verschiebbaren Ventilkolben und von einem vom Ventilkolben öffnenden bzw. schließenden Ventilsitz gebildet wird, daß der Ventilkolben von einer Feder zum Zwecke des selbsttätigen Schließens des Ventils beaufschlagt ist, daß der Ventilkolben an seinem freien Ende von je einem an dem ersten und zweiten Hebel ausgebildeten ersten und zweiten Betätigungselement beaufschlagbar ist, daß das Ventil gegenüber dem Gehäuse gedichtet ist, daß der erste Hebel zusätzlich zum Ventilkolben hin verschiebbar angeordnet ist, daß, wenn nach Verdrehung eines der beiden Hebel in die zur Öffnung des Ventils dienende Stellung auch der andere Hebel ebenfalls durch Drehung in die zur Öffnung des Ventils dienende Offenstellung gebracht wird, beide Betätigungselemente der Hebel derart aufeinander einwirken, daß der erste Hebel in Öffnungsrichtung des Ventilkolbens auf einer am zweiten Hebel ausgebildeten zweiten Achse verschoben wird und dabei das Ventil öffnet.

In dieser zweiten Ausführungsform der Ventileinrichtung wird also zum Öffnen des Ventils der Ventilkolben gerade in umgekehrter Richtung wie im ersten Ausführungsbeispiel bewegt. Dies hat den Vorteil, daß, wenn der Ventilkolben einmal nach längerem Nichtbenutzen der Espressomaschine in der Ventilbohrung festklebt bzw. festsitzt, dieser zum Öffnen des Ventils durch das erste Betätigungsglied, wenn sich das zweite bereits in seiner das Ventil öffnenden Stellung befindet, zwangsweise in seine Offenstellung verschoben wird. Dabei läuft sich der Ventilkolben wieder in der Ventilbohrung frei, so daß er sich anschließend wieder alleine durch die Vorspannkraft der Feder in seine Schließstellung bewegen kann, wenn die beiden Betätigungsglieder aus dem Wirkungsbereich des Ventilkolbens herausgedreht werden.

Während im ersten Ausführungsbeispiel der Ventileinrichtung die beiden Betätigungselemente unabhängig voneinander, also gegenüber dem Ventilkolben nebeneinander angeordnet sind, sind im zweiten Ausführungsbeispiel der Ventileinrichtung die beiden Betätigungselemente in Längsrichtung des Ventilkobens hintereinander angeordnet, wobei immer dasjenige Betätigungselement, das zuletzt in seine das Ventil öffnende Stellung gedreht wird, ähnlich wie ein Keil dazwischen geschoben wird, so daß sich das erste Betätigunsglied in Längsrichtung des Ventilkolbens und zu diesem hin verschiebt und dabei den Ventilkolben in seine Ventilbohrung hineinschiebt. Hierdurch hebt der am Ventilkolben ausgebildete Dichtsitz von dem im Gehäuse ausgebildeten Dichtsitz ab und die Leitung zur Brühkammer wird freigegeben.

Da beim Einsetzen des Siebkorbträgers das erste Betätigungsglied verdeckt verdreht wird und dieses dann, wenn bereits der zweite Hebel in seiner das Ventil öffnenden Bereitschaftsstellung also auf Espressobetrieb steht, gleichzeitig zum Öffnen des Ventils verdeckt in Längsrichtung des Ventilkolbens verschoben wird, greift dieser Bewegungsablauf nicht in die äußere Kontur der Espressomaschine ein, da der erste Hebel von außen unzugänglich im Gehäuse der Siebkorbhalteeinrichtung integriert ist.

Um auf einfache Weise eine auf den Ventilkolben gerichtete axiale Längsverschiebung am ersten Betätigungselement zu erzeugen, ist es in einer Weiterbildung der Erfindung vorgesehen, daß der dem zweiten Hebel zugewandte Bereich des ersten Betätigungselementes am ersten Hebel eine als erste Rampe ausgebildete erste Gleitbahn ist und daß die erste Rampe, in Schließrichtung des Siebkorbträgers gesehen, ein Gefälle aufweist. Die am ersten Hebel ausgebildete erste Rampe hat den Vorteil, daß bei sehr geringem Gefälle auch das Ventil in Abhängigkeit des Drehwinkels des Siebkorbträgers nur sehr langsam geöffnet wird. Steht nämlich beispielsweise der Dampfkessel unter seinem maximalen Betriebsdruck, so fließt bei einem sich langsam öffnenden Ventil das Brühwasser nicht schlagartig in die Brühkammer, so daß unerwünschte Aufwirbelungen des Espressomehls vermieden werden. Durch das langsame Öffnen des Ventils sollen nämlich ähnliche Fließverhältnisse wie bei einer pumpenbetriebenen Espressomaschine hergestellt werden.

Die am ersten Hebel ausgebildete erste Rampe gleitet beim Verdrehen des ersten oder zweiten Hebels oder beider gemeinsam an einer am zweiten Hebel ausgebildeten Kante oder Fläche entlang, so daß der erste Hebel in axialer Richtung zum Ventilkolben hin verschoben wird und diesen dabei in seine Offenstellung bringt. Selbstverständlich ist es aber auch denkbar, daß anstelle der ersten Rampe am ersten Hebel diese Rampe am zweiten Hebel ausgebildet ist, durch die dann letztendlich dasselbe Ergebnis hervorgerufen wird.

Besonders vorteilhaft ist es, wenn zusätzlich zu der am ersten Hebel ausgebildeten ersten Rampe an dem dem ersten Hebel zugewandten Bereich des zweiten Hebels eine als zweite Rampe ausgebildete zweite Gleitbahn vorgesehen ist und wenn die zweite Rampe im wesentlichen parallel zur ersten Rampe verläuft. Durch die aufeinandergleitenden Rampen lassen sich beide Hebel besonders leicht bei geringer Drehkraft betätigen.

Nach einer Weiterbildung der Erfindung ist der zweite Hebel direkt auf der ersten Achse und der erste Hebel auf einer am zweiten Hebel ausgebildeten zweiten Achse drehbar gelagert. Bei dieser zweiten Ausführungsform der Hebeleinrichtung ist also der erste Hebel über eine auf dem zweiten Hebel ausgebildete zweite Achse und letzterer wiederum auf der ersten Achse an der Siebkorbhalteeinrichtung gelagert, während dies im ersten Ausführungsbeispiel gerade umgekehrt ausgeführt ist. Im zweiten Ausführungsbeispiel stellt also ausschließlich nur der erste Hebel den Kontakt zum Ventilkolben her, während im ersten Ausführungsbeispiel beide Hebel direkt auf den Ventilkolben einwirken können.

Ist nur an einem der beiden Hebel eine Rampe ausgebildet, so können zum Öffnen des Ventils beide Hebel die gleiche Drehrichtung aufweisen. Sind hingegen an beiden Hebeln Rampen ausgebildet, so ist zum Öffnen des Ventils die Drehrichtung des ersten Hebels entgegengesetzt der Drehrichtung des zweiten Hebels, damit die Rampen aufeinander zulaufen und in Wirkeingriff gelangen können, so daß sie gegeneinander entlang gleiten können.

Damit der erste Hebel vom Siebkorbträger überhaupt betätigt werden kann, muß dieser bis in den Wirkungsbereich des Siebkorbträgers hineinreichen. Dabei ist es vorteilhaft, daß der erste Hebel im wesentlichen senkrecht zur Längsachse des Ventilkolbens und der ersten Achse des ersten Hebels verläuft, daß das zum Siebkorbträger sich erstreckende freie Ende des ersten Hebels gegenüber dem horizontal verlaufenden Bereich des ersten Hebels abgewinkelt ist und sich parallel zur Längsachse des Kolbens und der ersten Achse des zweiten Hebels erstreckt und daß das freie Ende mit einem am Siebkorbträger ausgebildeten Anschlag in Wirkverbindung bringbar ist, der radial außerhalb einer an der Siebkorbhalteeinrichtung ausgebildeten Dichtverbindung am Siebkorbträger angeordnet ist. Da bei der zweiten Ausführungsform sich der erste Hebel mit dem abgewinkelten freien Ende zum Ventilkolben hin verschiebt, muß für diesen Bereich an der Siebkorbhalteeinrichtung Freiraum vorhanden sein.

Um einen explosionsartigen Austritt des Wassers am Ventil bei seinem schnellen Öffnen zu vermeiden, wenn beispielsweise die Steigung der Rampen verhältnismäßig groß gewählt wurde, ist in einer Weiterbildung der Erfindung vorgesehen, daß im oder nach dem Ventil zur Brühkammer hin in der ersten Leitung eine als Reduzierventil ausgebildete Drossel angeordnet ist. Die Drossel kann aber auch vom Ventil selbst gebildet werden, indem der Öffnungsquerschnitt des Ventils nur so groß bemessen ist, daß eine explosionsartige Verpuffung des unter Druck stehenden Wassers am Austritt in die Brühkammer vermieden wird.

Mehrere Ausführungsbeispiele der Erfindung sind in der Zeichnung dargestellt und werden im folgenden näher erläutert. Es zeigen:
- Fig. 1: Längsschnitt durch eine Siebkorbhalteeinrichtung einer Espressomaschine gemäß der Schnittführung I-I nach Fig. 4 nach einem ersten Ausführungsbeispiel, bei dem beide Hebel direkt auf den Ventilkolben einwirken und ihn gegen die Kraft einer Feder in Schließstellung halten und bei dem das freie Ende des ersten Hebels in die Zeichenebene gedreht wurde,
- Fig. 2: eine Siebkorbhalteeinrichtung nach Fig.1, jedoch mit einem zweiten Ausführungsbeipiel einer Hebel- und Ventilanordnung, bei der nur ein Hebel direkt auf den Ventilkolben einwirkt und bei der das Ventil seine Schließstellung nur dann erreicht, wenn der erste Hebel keine Kraft auf den Ventilkolben ausübt,
- Fig. 3: Längsschnitt durch ein zweites, gegenüber dem zweiten Ausführungsbeispiel nach Fig. 2 abgewandeltes Ventil, wobei die Siebkorbhalteeinrichtung nur andeutungsweise dargestellt ist,
- Fig. 4: Schnitt gemäß der Schnittführung IV-IV nach Fig. 1, wobei die beiden Hebel das Ventil in seiner Schließstellung halten und wobei der tiefer liegende Siebkorbträger und ein Teil der Siebkorbhalteeinrichtung nur andeutungsweise dargestellt sind,
- Fig. 5: Schnitt durch das am zweiten Hebel ausgebildete zweite Betätigungselement mit seiner zweiten Rampe,
- Fig. 6: Schnitt durch das am ersten Hebel ausgebildete erste Betätigungselement mit seiner ersten Rampe,
- Fig. 7: Schnitt durch die beiden Betätigungselemente der beiden Hebel gemäß der Schnittführung X-X nach Fig. 2, wobei der Siebkorbträger in der Siebkorbhalteeinrichtung ordnungsgemäß eingesetzt ist und gleichzeitig der zweite Hebel die Stellung für Espressobetrieb eingenommen hat,
- Fig. 8: Teilschnitt gemäß Fig. 7, jedoch mit dem Unterschied, daß der Hebel auf Dampfbetrieb steht,
- Fig. 9: Teilschnitt gemäß Fig. 7, jedoch mit dem Unterschied, daß der Siebkorbträger nicht in die Siebkorbhalteeinrichtung eingesetzt ist und der zweite Hebel dennoch auf Espressobetrieb steht und
- Fig. 10: Teilschnitt gemäß Fig. 9, jedoch mit dem Unterschied, daß der zweite Hebel auf Dampfbetrieb steht.

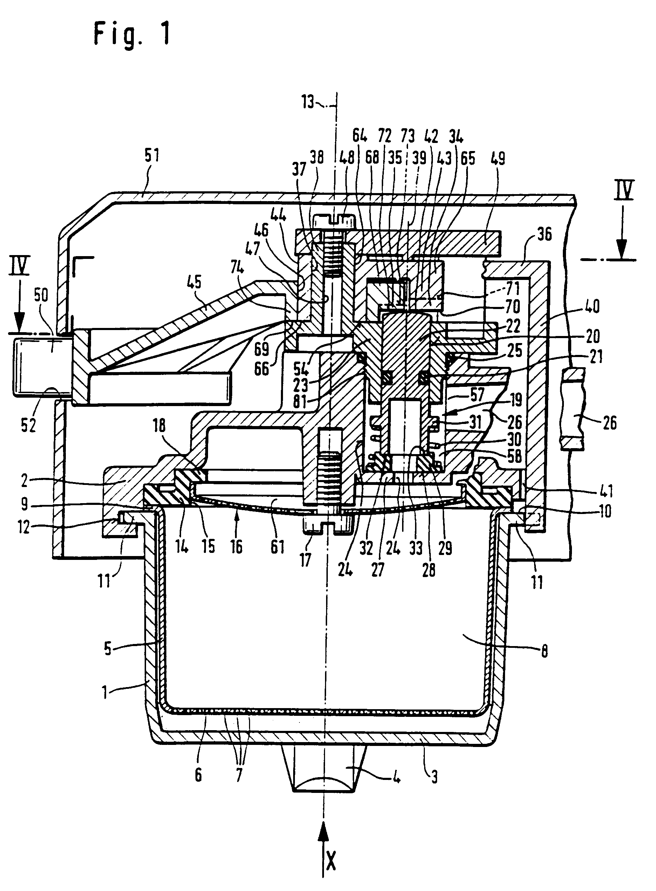

Von der Espressomaschine ist in den Figuren 1 bis 3 lediglich der oberhalb des Siebkorbträgers 1 abgebildete Abschnitt der Siebkorbhalteeinrichtung 2 im Längsschnitt dargestellt. Der übrige Teil der Espressomaschine, wie z. B. Dampfkessel, Heizung, Dampfkesselverschluß, Dampfleitung zum Erzeugen von Dampf, Schalter, Gehäuse etc. sind hier der Einfachheit halber nicht dargestellt, da sie mit der eigentlichen Erfindung nur am Rande zu tun haben. Um Wiederholungen zu vermeiden, wurden in den Figuren 1 bis 10 für entsprechend gleich funktionierende Bauteile gleiche Bezugszeichen gewählt.

Der Siebkorbträger 1 ist im wesentlichen topfförmig ausgebildet und weist an seinem Boden 3 mindestens einen als Ausgießeinrichtung dienenden Auslaß 4 auf, aus dem der zubereitete Espresso in eine unterhalb des Siebkorbträgers 1 ausgebildete Tasse, die hier ebenfalls nicht dargestellt ist, abfließt. In dem Siebkorbträger 1 befindet sich ein topfförmiger Siebkorb 5, der an seinem Boden 6 eine Vielzahl von im Durchmesser kleinen Durchlässen 7 aufweist und der das eigentliche Sieb der Espressomaschine bildet. Anstelle des Siebkorbes 5 kann selbstverständlich auch nach der Erfindung ein scheibenförmiges Sieb im Siebkorbträger 1 eingesetzt werden, so daß unter der Bezeichnung Siebkorbträger auch ein Siebträger zu verstehen ist.

Der vom Siebkorb 5 gebildete Raum 8 dient nach Fig. 1 zur Aufnahme von Espressomehl und bildet somit die eigentliche Brühkammer 8, die gegenüber der Ausgießeinrichtung 4 durch den Siebkorb 5 getrennt ist. Der Siebkorb 5 weist an seinem in der Zeichnung oberen Ende einen nach außen gerichteten Ringbund 9 auf, der am oberen Ende an der Stirnfläche 10 des Siebkorbträgers 1 anliegt und sich dort abstützt, so daß der mit den Durchlässen 7 versehene Boden 6 des Siebkorbes 5 stets einen gewissen Abstand zum Boden 3 des Siebkorbträgers 1 aufweist.

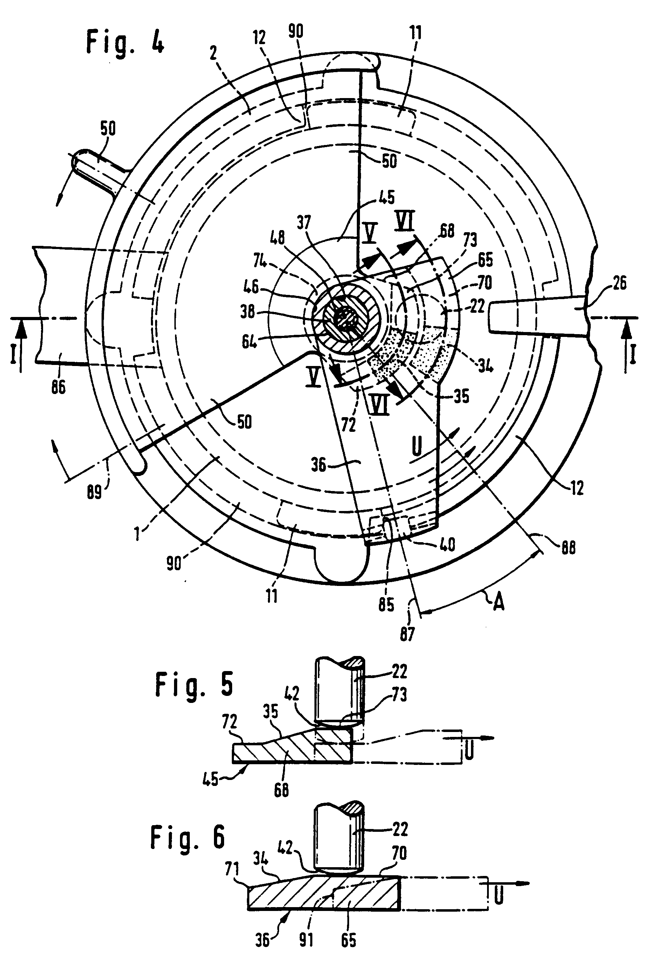

Am oberen Rand des Siebkorbträgers 1 sind nach den Fig. 1 und 4 am Außenumfang radial hervorstehende und kreisringsegmentförmige Vorsprünge 11 ausgebildet, die in an der Siebkorbhalteeinrichtung 2 ausgebildete Nutabschnitte 12 eingreifen. Die Vorsprünge 11 bilden mit den Nutabschnitten 12 den bei Siebkorbträgern 1 von Espressomaschinen in an sich bekannter Weise vorhandenen Bajonettverschluß, durch den beim Einsetzen des Siebkorbträgers 1 und seinem anschließenden Verdrehen in der Siebkorbhalteeinrichtung 2 die Stirnfläche 10 nach Fig. 1 in Längsrichtung der Mittellinie 13 nach oben so weit axial verschoben wird, daß dabei der Ringbund 9 dichtend gegen einen am Siebkorbträger 1 befestigten Dichtring 14 gedrückt wird, so daß die Brühkammer 8 dichtend mit der Siebkorbhalteeinrichtung 2 verbunden ist.

Der Dichtring 14 weist nach Fig. 1 eine Mittenbohrung 15 auf, in der ein zweites Sieb 16 eingesetzt ist, welches seinerseits über eine Schraube 17 in der Siebkorbhalteeinrichtung 2 gehalten wird und welches mit ihr eine Verteilerkammer 61 bildet. Da das zweite Sieb 16 nach Fig. 1 von unten her gegen einen am Dichtring 14 ausgebildeten, als Anschlag dienenden Ringbund 18 anschlägt, wird der Dichtring 14 über das Sieb 16 und die Schraube 17 ebenfalls an der Siebkorbhalteeinrichtung 2 ortsfest gehalten. Das zweite Sieb 16 begrenzt die Brühkammer 8 zur Siebkorbhalteeinrichtung 2 hin und dient zum einen dazu, daß das von oben über die Verteilerkammer 61 auf das zweite Sieb 16 fallende Brühwasser gleichmäßig über die Fläche des zweiten Siebes 16 verteilt wird, damit es großflächig unter Druck in die Brühkammer 8 eintreten kann und zum anderen werden Verschmutzungen durch Espressomehl an der In der Siebkorbhalteeinrichtung 2 ausgebildeten Ventileinrichtung 19 und der Zuleitung 26 vermieden.

Die Ventileinrichtung 19 besteht in Fig. 1 aus einer parallel zur Mittellinie 13 und oberhalb des zweiten Siebes 16 in der Siebkorbhalteeinrichtung 2 verlaufenden Ventilbohrung 20, in der ein über eine Ringdichtung 21 gegenüber der Ventilbohrung 20 gedichteter Ventilkolben 22 axial verschiebbar angeordnet ist. Die Ringdichtung 21 ist oberhalb einer die erste Leitung 26 über eine Ventilkammer 58 mit den Ventilsitzen 32, 33 verbindenden Einlaßöffnung 57 am Ventilkolben 22 befestigt. Die Ventilbohrung 20 ist nicht direkt in der Siebkorbhalteeinrichtung 2 ausgebildet, sondern sie verläuft in einem Deckel 23, der in einer in der Siebkorbhalteeinrichtung 2 ausgebildeten Stufenbohrung 24 mittels einer Dichtung 25 dichtend befestigt ist. Die Stufenbohrung 24 ist an ihrem größeren Durchmesser über eine erste Leitung 26 mit einem in der Zeichnung nicht dargestellten Dampfkessel verbunden, wobei sie im Dampfkessel bis nahe zum Boden verläuft, damit bereits bei geringstem Wasserfüllstand nicht Dampf, sondern bereits Wasser der ersten Leitung 26 zugeführt wird.

Das zum zweiten Sieb 16 gerichtete Ende der Stufenbohrung 24 weist eine im Durchmesser kleinere Ringstufe 27 auf, die gleichzeitig das Ende der Stufenbohrung 24 bildet, welche den Eingang zur Brühkammer 8 darstellt. An der dem Ventilkolben 22 zugewandten Ringfläche 28 der Ringstufe 27 liegt eine Ringdichtung 29 druckdicht an, die von einer Druckfeder 30, welche sich an einem am Ventilkolben 22 ausgebildeten Ringbund 31 unter Vorspannung abstützt, an der Ringfläche 28 auf Anlage gehalten wird.

Der Ventilkolben 22 durchdringt den Deckel 23 in Fig. 1 über die Ventilbohrung 20 nach oben und weist an seinem freien Ende eine als konvex verlaufende Gleitbahn auf, an der sowohl ein erstes und zweites Betätigungselement 34 und 35 in Form einer ersten und zweiten Rampe derart anliegen, daß der Ventilkolben 22 gegen die Kraft der Druckfeder 30 mit seinem Dichtsitz 32 gegen den Dichtsitz 33 gedrückt wird, so daß die Leitung 26 vom Dampfkessel zur Brühkammer 8 hin verschlossen ist.

Die erste Rampe 34 ist an dem ersten Hebel 36 ausgebildet, der wiederum über eine an ihm ausgebildete erste Bohrung 37 an einer Mantelfläche 64 einer am Deckel 23 in Fig. 1 nach oben hervorstehenden, als Zapfen angeformten erste Achse 38 drehbar gelagert ist. Die erste Achse 38 verläuft im wesentlichen parallel zur Längsachse 39 des Ventilkolbens 22. Der erste Hebel 36 verläuft oberhalb des Deckels 23 im wesentlichen senkrecht zur Längsachse 39 des Ventilkolbens 22.

An dem in Fig. 1 rechten Bereich ist das freie Ende 40 des ersten Hebels 36 abgewinkelt und verläuft im wesentlichen parallel zur Längsachse 39 des Ventilkolbens 22. Zur Verdeutlichung wurde das freie Ende 40 in die Zeichenebene gelegt, um in einem einzigen Schnitt auch den Verlauf des kompletten ersten Hebels 36 darstellen zu können. In Wirklichkeit verläuft nämlich das freie Ende 40 so, wie In Fig. 4 dargestellt. Das freie Ende 40 durchdringt einen in der Siebkorbhalteeinrichtung 2 ausgebildeten Schlitz 41 und gelangt in den Wirkungsbereich eines am Siebkorbträger 1 ausgebildeten Vorsprunges 11, wenn dieser in der Siebkorbhalteeinrichtung 2 eingesetzt ist. Die erste Rampe 34 ist an einem nach Fig. 1 rechts von der Längsachse 39 ausgebildeten und auf das freie Ende 42 des Ventilkolbens 22 hin gerichteten Vorsprung 43 angeordnet.

Nach den Figuren 1 und 4 ist unterhalb des ersten Hebels 36 an seiner die erste Bohrung 37 bildenden Außenfläche 44 über eine an einem rohrförmigen Abschnitt 74 ausgebildete zweite Bohrung 46 ein zweiter Hebel 45 drehbar gelagert. Die Außenfläche 44 dient somit als zweite Lagerachse für den zweiten Hebel 45. Rechts von der Mittellinie 13 der Achse 38 ist am zweiten Hebel 45 das am freien Ende 42 des Ventilkolbens 22 anliegende zweite Betätigungselement 35 ausgebildet, dessen zweite Anschlagfläche 73 nur in der hier dargestellten Schließstellung des zweiten Hebels 45 am freien Ende 42 anliegt und ebenfalls den Ventilkolben 22 gegen den Ventilsitz 33 drückt. Unter Schließstellung des ersten bzw. zweiten Hebels 36 bzw. 45 ist die Stellung zu verstehen, in der die Ventileinrichtung 19 verschlossen ist.

Während die erste Rampe 34 und die sich an die Rampe 34 anschließende und horizontal verlaufende Anschlagfläche 70 nach Fig. 1 rechts von der Mittellinie 39 des Ventilkolbens 22 ausgebildet ist, verlaufen die zweite Rampe 35 und die sich an die Rampe 35 zu beiden Seiten anschließenden und horizontal verlaufenden Anschlagflächen 72, 73 links von der Längsachse 39 des Ventilkolbens 22. Die in Fig. 1 am ersten Vorsprung 43 gestrichelt dargestellte und horizontal verlaufende Linie 71 stellt das untere Ende (Fig. 6) der ersten Rampe 34 dar, von wo sich eine dritte Anschlagfläche 71 nach links erstrecken kann, während die Linie 70 das obere Ende der ersten Rampe 34 darstellt, von wo sich nach rechts die erste Anschlagfläche 70 anschließt. Gleiches gilt für die sich am zweiten Hebel 45 zu beiden Seiten der zweiten Rampe 35 anschließende zweite und vierte Anschlagfläche 73, 72. Diese Anschlagfächen 70 bis 73 dienen als Arretierung und Begrenzung des Ventilkolbens 22 und der beiden Hebel 36, 45.

Es ist aber auch denkbar, daß zum Arretieren des Ventilkolbens 22 nach den Figuren 1 und 4 nur in der die Ventileinrichtung 19 verschließenden Stellung am ersten und zweiten Hebel 35, 45 eine Anschlagfläche 70, 73 ausgebildet ist. Die nach Fig. 4 am anderen Ende des zweiten Schenkels 68 ausgebildete Anschlagfläche 72 dient also dazu, daß der Ventilkolben 22 in Offenstellung des Ventils 19 nicht aus der Ventilbohrung 20 herausgleiten kann. Die dritte Anschlagfläche 71 wird somit am ersten Schenkel 65 des ersten Hebels 36 lediglich von einer Kante gebildet, da sie bei Vorhandensein der vierten Anschlagfläche 72 nicht notwendig ist. Entfällt aber die vierte Anschlagfläche 72, so ist die dritte Anschlagfläche 71 in voller Länge entsprechend dem maximalen Drehwinkel des zweiten Hebels 45 in seine zum Herstellen von Dampf erforderliche Stellung notwendig. Wird hingegen der Ventilkolben 22 gegen Herausfallen gesichert, so ist weder die Anschlagfläche 71 noch die Anschlagfläche 72 erforderlich.

Um die beiden Hebel 36, 45 axial auf der ersten Achse 38 zu sichern, ist am freien Ende der Achse 38 in eine Gewindebohrung 47 eine Schraube 48 eingedreht, die über ein Sicherungsglied 49 den ersten Hebel 36 auf dem Deckel 23 axial sichert, wobei der erste Hebel 36 ebenfalls den zweiten Hebel 45 in der in Fig. 1 dargestellten Lage axial sichert, bzw. seine Stirnfläche 69 auf Anschlag oder ganz in der Nähe an einer am Deckel 23 ausgebildeten Ringstufe 54 hält, wo sich ebenfalls auch die Stirnfläche 66 des ersten Hebels 36 abstützt. Der zweite Hebel 45 ragt mit seinem freien Ende 50 über eine Öffnung 52 aus dem die Siebkorbhalteeinrichtung 2 nach oben und seitlich begrenzenden Gehäuse 51 heraus, so daß über das den Handgriff bildende freie Ende 50 der zweite Hebel 45 von Hand betätigt werden kann.

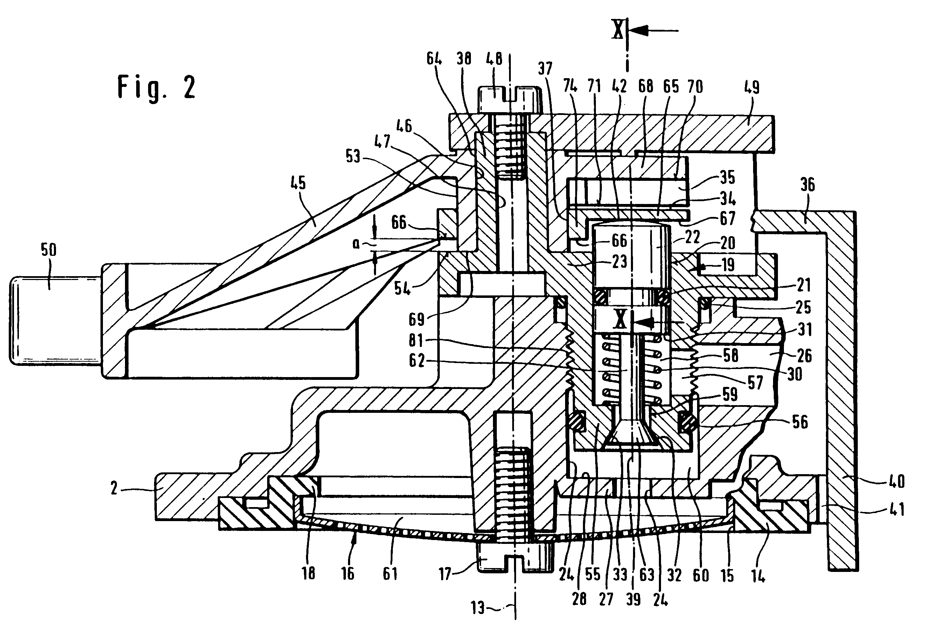

Die in Fig. 2 dargestellte Siebkorbhalteeinrichtung 2 unterscheidet sich gegenüber derjenigen in Fig. 1 nur dadurch, daß eine anders gestaltete Ventileinrichtung 19 und eine damit verbundene Veränderung der Hebelanordnung 36 und 45 gewählt wurde. Dabei ist der gehäuseseitige Ventilsitz 33 an einem am Deckel 23 ausgebildeten, rohrförmigen Ende 55 angeordnet, an dessen der Ringstufe 27 zugewandten Bereich der Ventilsitz 32 konisch und in der Zeichnung nach oben verjüngend verläuft. Das rohrförmige Ende 55 des Deckels 23 ist im Bereich des größen Durchmessers der Stufenbohrung 24 mittels eines O-Ringes 56 gegenüber der Stufenbohrung 24 gedichtet. Zwischen dem Dichtring 25 und dem O-Ring 56 ist am rohrförmigen Ende 55 des Deckels 23 eine Einlaßöffnung 57 ausgebildet, die die Verbindung der ersten Leitung 26 zur Ventilkammer 58 der Ventilbohrung 20 herstellt. Die Ventilkammer 58 ist über eine am rohrförmigen Ende 55 ausgebildet Bohrung 59 mit den Ventilsitzen 32, 33 verbunden, die wiederum bei geöffnetem Ventil 19, also bei voneinander entfernten Ventilsitzen 32, 33 über die Kammer 60 und die mit kleinerem Durchmesser versehene Stufenbohrung 24 mit der Verteilerkammer 61 verbunden sind.

An dem in Fig. 2 unteren, an die Ventilkammer 58 angrenzenden Ende des Ventilkolbens 22 ist ein die Ventilkammer 58 und die Bohrung 59 durchdringender Zylinderstift 62 angeformt, der an seinem in die zweite Kammer 60 hineinragenden Ende einen sich in der Zeichnung nach oben verjüngenden Kegelstumpf 63 aufweist, dessen kegelige Mantelfläche den Ventilsitz 32 des Ventilkolbens 22 bildet.

Bei der Ventileinrichtung 19 nach Fig. 2 ist der zweite Hebel 45 über seine Bohrung 46, im Gegensatz zu Fig. 1, auf der Mantelfläche 64 der ersten Achse 38 drehbar gelagert, während der erste Hebel 36 über seine Bohrung 37 auf der zylinderreichen Außenfläche 53 des zweiten Hebels 45 drehbar gelagert ist, so daß die Außenfläche 53 die eigentliche Achse für den ersten Hebel 36 bildet.

Der erste Hebel 36 ist in Fig. 2, im Gegensatz zu Fig. 1, unterhalb des zweiten Hebels 45 angeordnet und wird von diesem nach oben begrenzt. An dem dem zweiten Hebel 45 zugewandten Schenkel 65 ist am ersten Hebel 36 das erste Betätigungselement 34 in Form einer ersten Rampe ausgebildet, während direkt oberhalb am zweiten Schenkel 68 des zweiten Hebels 45 das zweite Betätigungselement 35 in Form einer zweiten Rampe angeordnet ist, das mit der ersten Rampe 34, bei Schließstellung beider Hebel 36, 45, wenig oder gar nicht in Gleitkontakt steht. Die zweite Rampe 35 ist also nahezu vollständig aus dem Wirkungsbereich des Ventilkolbens 22 herausgedreht und ist daher auch nicht in der Längsschnittdarstellung des Ventilkolbens 22 in Fig. 2 schraffiert dargestellt, sondern sie ist im Hintergrund erkennbar. Da die erste Rampe 34 ebenfalls aus der Zeichenebene, aber in entgegengesetzter Richtung herausgedreht ist, ist sie in vollständiger Höhe nicht erkennbar.

Wie aus Fig. 2 deutlich hervorgeht, ist zwischen der am Deckel 23 ausgebildeten Ringstufe 54, die den Übergang zur ersten Achse 38 bildet und der der Ringstufe 54 zugewandten Stirnfläche 66 ein Ringspalt (a) vorhanden, der dazu erforderlich ist, daß sich der erste Hebel 36 in der Zeichnung nach unten axial verschieben kann, wenn der erste und zweite Hebel 36, 45 in seine die Ventileinrichtung 19 öffnende Stellung gebracht werden. Wird eine der beiden Hebel 36 oder 45 in seine die Ventileinrichtung 19 schließende Stellung gebracht, so wird der Ventilkolben 22 alleine durch die Kraft der Feder 30 in Fig. 2 nach oben bewegt und nimmt dabei über seine konvex verlaufende Gleitbahn 42 und die am Schenkel 65 ausgebildete äußere Begrenzungswand 67 den zweiten Hebel 36 nach oben mit.

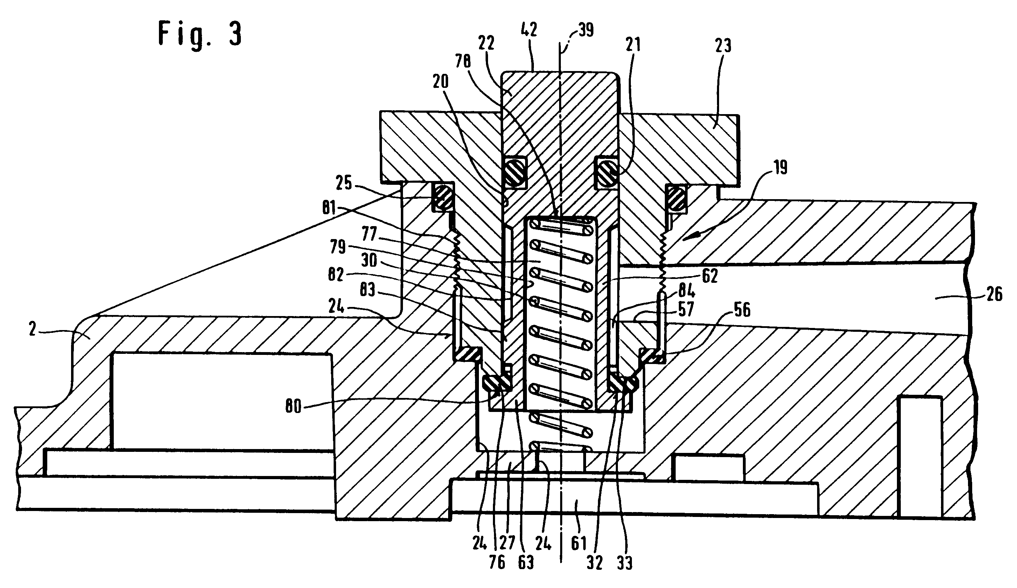

In Fig. 3 wurde die Lagerung und die Anordnung des ersten und zweiten Hebels 36, 45 der Einfachheit halber weggelassen, da diese Anordnung der in Fig. 2 dargestellten Anordnung entspricht und somit funktionell genauso arbeitet. Auch die Ventileinrichtung 19 stimmt mit der in Fig. 2 dargestellten Ventileinrichtung 19 im wesentlichen überein, nur wurde anstelle der konischen Ausbildung der Ventilsitze 32, 33 nach Fig. 2 in Fig. 3 eine senkrecht zur Längsachse 39 des Ventilkolbens 22 laufende Ventilsitzanordnung 32, 33 gewählt.

Um auch in Fig. 3 eine gute Abdichtung des Ventilkolbens 22 gegenüber dem Deckel 23 zu erreichen, ist zwischen den Ventilsitzen 32, 33 eine Dichtung 76 ausgebildet. Auch wird der in Fig. 2 dargestellte Zylinderstift 62 durch eine rohrförmige Verlängerung mit gleicher Positionsnummer ersetzt, in dessen Innenraum 77 die Druckfeder 30 ausgebildet ist. Die Druckfeder 30 stützt sich auf der einen Seite am Ende 78 der den Innenraum 77 begrenzenden Sacklochbohrung 79 und an der anderen Seite an der Ringstufe 27 ab.

Ein weiterer Unterschied gegenüber der Ventileinrichtung 19 nach Fig. 2 besteht darin, daß der O-Ring 56 von dem Deckel 23 gegen eine an der Siebkorbhalteeinrichtung 2 ausgebildete Ringstufe 80 gepreßt wird. Der Deckel 23 ist ebenso wie in Fig. 2 durch ein Gewinde 81 in der mit dem größten Durchmesser versehenen Stufenbohrung 24 fest verschraubt.

In Fig. 3 ist der Ventilkolben 22 im Bereich unterhalb der ersten Leitung 26 im Durchmesser zurückgesetzt, damit bei geöffnetem Ventil 19 das Wasser über diesen Abschnitt 82 zur Verteilerkammer 61 abfließen kann. Damit keine explosionsartigen Auswürfe von Wasser am zweiten Sieb 16 (Fig. 2) gebildet werden können, sind unterhalb des Abschnittes 82 am Ventilkolben 22 hervorstehende, auf seinem Umfang gleichmäßig verteilte Rippen 83 angeordnet, deren Außendurchmesser bis an die Wandung der Stufenbohrung heranragt. Die von zwei benachbarten Rippen gebildeten, entlang der Längsachse 39 des Ventilkolbens 22 verlaufenden Schlitze 84 bilden in dem Zufluß von der ersten Leitung 26 zur Verteilerkammer 61 ein als Drossel arbeitendes Reduzierventil.

Aus Fig. 4 in Verbindung mit Fig. 1 ist zu erkennen, daß das freie Ende 40 des ersten Hebels 36 an einer als Mitnehmer am Vorsprung 11 des Siebkorbträgers ausgebildeten Mitnehmerfläche 85 anschlägt. Die in Fig. 4 gezeigte Stellung des Siebkorbträgers 1, an dem ein sich nach außen wegerstreckender Handgriff 86 befestigt ist, gibt gerade die Stellung wieder, in der der Siebkorbträger 1 gerade mit seinem Vorsprüngen 11 in die Öffnungen 90 des Bajonettverschlusses eingesetzt werden soll, also ist er noch nicht über die Nut 12 in seine Verschlußstellung gebracht. In dieser Stellung schlägt gerade oder nach einer geringen Verdrehung in Schließrichtung die Mitnehmerfläche 85 am freien Ende 40 des ersten Hebels 36 an. In dieser Stellung wird der Ventilkolben 22 gemäß Fig. 4 und 6 noch durch die Anschlagfläche 70 in seiner Schließstellung gehalten. Dies gilt ebenso für den zweiten Hebel 45, wenn er die in Fig. 4 und 6 eingenommene Stellung einnimmt.

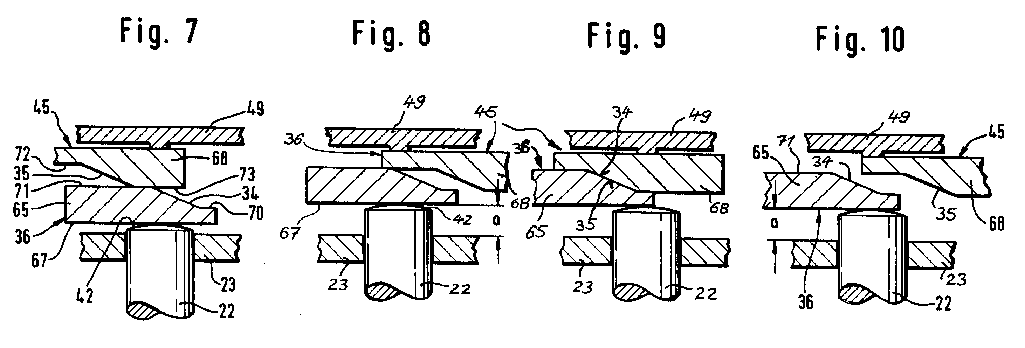

In den Figuren 7 bis 10 werden lediglich die für die beiden Hebel 36 und 45 möglichen zwei Endstellungen gezeigt. Mit Ausnahme der in Fig. 7 gezeigten Stellung, wo der Ventilkolben 22 seine Offenstellung einnimmt, befindet sich in den Figuren 8 bis 10 der Ventilkolben 22 immer in seiner die Ventileinrichtung 19 verschließenden Stellung. Da in den Figuren 7 bis 10 stets nur dieselben Bauteile dargestellt sind, wurden der Einfachheit halber lediglich in Fig. 7 die Positionsnummern eingezeichnet.

Die Wirkungsweise der erfindungsgemäßen Espressomaschine ist folgende:
In den Fign. 1 und 4 bis 6 befindet sich der erste Hebel 36 noch in seiner die Ventileinrichtung 19 verschließenden Ausgangsstellung und auch der zweite Hebel 45 befindet sich in seiner die Ventileinrichtung 19 verschließenden Ausgangs- bzw. Schließstellung. In der hier gezeigten Stellung beider Hebel 36, 45 kann kein Wasser über die erste Leitung 26 zur Verteilerkammer 61 und somit auch zur Brühkammer 8 fließen. In dieser Stellung kann also kein Espresso hergestellt werden. Wird dennoch der Dampfkessel aufgeheizt, so kann, wenn unabhängig von der ersten Leitung 26 eine zweite Leitung vorgesehen ist, über diese Dampf über ein Dampfventil und von dort zu einem Dampfauslaß strömen, so daß kalte Getränke aufgeheizt und aufgeschäumt werden können. Damit die zweite Leitung ausschließlich Dampf fördert, muß der Eintritt der zweiten Leitung 26 oberhalb des maximalen Wasserfüllstandes im Dampfkessel angeordnet sein.

Wird nun der Siebkorbträger 1 mit seinen zwei diametral gegenüberliegenden Vorsprüngen 11 in die Nut 12 der Siebkorbhalteeinrichtung 2 durch axiale Bewegung eingesetzt, allerdings noch nicht verdreht, so entsteht die in Fig. 4 dargestellte Stellung des Siebkorbträgers 1 und des ersten Hebels 36. Wird nun der Siebkorbträger 1 entgegen dem Uhrzeigersinn nach Fig. 4 so weit verdreht, bis der Ringbund 9 des Siebkorbes 5 druckdicht an dem Dichtring 14 anliegt, so wandert die gedachte Mittellinie 87 und somit die Mitte des freien Endes 14 des ersten Hebels 36 etwa bis zu der strichpunktierten Linie 88. Entsprechend diesem Drehwinkel hat also der Siebkorbträger 1 über seine Mitnehmerfläche 85 das freie Ende 40 des ersten Hebel 36 verdreht. Da bei dieser Verdrehung der erste Schenkel 65 und somit die Anschlagfläche 70 sowie die erste Rampe 34 ebenfalls entgegen dem Uhrzeigersinn, also gemäß Fig. 6 in Richtung U, verdreht wurden, liegt nun, wie dies die gestrichelte Linie 91 in Fig. 6 zeigt, die erste Rampe 34 im Abstand unterhalb des freien Endes 42 des Ventilkolbens 22, ohne mit ihm in Gleitverbindung zu stehen, allerdings dies nur deshalb, da der zweite Hebel 45 nicht in Richtung U verdreht wurde, also er noch seine die Ventileinrichtung 19 verschließende Ausgangsstellung gemäß Fig. 4 inne hat. Diese Stellung ermöglicht bei ordnungsgemäß eingesetztem Siebkorbträger 1 in die Siebkorbhalteeinrichtung 2, daß ausschließlich nur Dampf erzeugt werden kann, der dann über die zusätzliche Dampfleitung, wie bereits oben beschrieben, ausströmen kann, wenn zusätzlich ein in der Zeichnung nicht dargestelltes Dampfventil geöffnet ist.

Um bei ordnungsgemäß eingesetztem Siebkorbträger 1 einen Espresso herstellen zu können, muß also noch der zweite Hebel 45 über sein freies Ende 50 von Hand entgegen dem Urzeigersinn bis in die durch die Mittellinie 89 angezeigte Stellung verdreht werden. Bei dieser Verdrehung kann nun der Ventilkolben 22 nach der gestrichelten Darstellung nach Fig. 5 über die Anschlagfläche 73 an der Rampe 35 bis zur Anschlagfläche 72 entlanggleiten, so daß er gemäß Fig. 1 durch die Kraft der Druckfeder 30 nach oben bewegt und sein Dichtsitz 32 den Dichtsitz 33 freigibt. In dieser Stellung ist die Ventileinrichtung 19 geöffnet und es kann das im Damfkessel unter Druck stehende Wasser von der ersten Leitung 26 über die Ventilsitze 32, 33 zum kleineren Druchmesser der Ventilbohrung 24 strömen, von wo es in die Verteilerkammer 61 gelangt und gleichmäßig über das zweite Sieb 16 in die Brühkammer 8 einströmt. Da das heiße Wasser unter Druck steht, wird es, wenn in der Brühkammer 8 Espressomehl eingefüllt ist, durch dieses hindurchgedrückt und extrahiert dabei das Espressomehl. Der Espresso wird dann über die am Boden 6 des Siebes 5 ausgebildeten Durchlässe 7 dem Auslaß 4 zugeführt wird, von wo er in eine darunter stehende Tasse einfließen kann.

Wird nach dem Herstellen eines Espressos der Siebkorbträger 1 zum Entleeren des verbrauchten Espressomehls aus der Siebkorbhalteeinrichtung 2 herausgedreht, so muß eine am ersten Hebel 36 angreifende Feder, die in der Zeichnung nicht dargestellt ist, dafür sorgen, daß der erste Hebel 36 selbstätig in seine das Ventil 19 verschließende Stellung zurückbewegt wird, wenn das freie Ende 40 des ersten Hebel 36 nur an der Mitnehmerfläche 85 lose anliegt,wie dies in Fig. 4 dargestellt ist.

Hat beispielsweise eine Bedienungsperson den Siebkorbträger 1 in die Siebkorbhalteeinrichtung 2 nicht eingesetzt, so hält der erste Hebel 36 die in Fig. 1, 4 und 6 dargestellt Stellung ein, das heißt, der Ventilkolben 22 wird durch die Anschlagfläche 70 in seiner Schließstellung gehalten. Betätigt nun eine Bedienungsperson den zweiten Hebel 45 über sein freies Ende 50 von Hand entgegen dem Uhrzeigersinn nach Fig. 4,also in Richtung U, so kann, obwohl die zweite Rampe 35 den Ventilkolben 22 freigegeben hat, dieser ebenfalls nicht in seine Offenstellung gelangen, da bei nicht ordnungsgemäß eingesetztem Siebkorbträger 1 weiterhin die Anschlagfläche 70 den Ventilkolben 22 in seiner Schließstellung hält.

Obwohl also der zweite Hebel 45 in seine zum Herstellen von Espresso dienende Offenstellung, gekennzeichnet durch die Mittellinie 89, gebracht wurde, kann bei nicht eingesetztem Siebkorbträger 1 kein kochendes Wasser explosionsartig durch das zweite Sieb 16 in die Atmosphäre austreten. Hierdurch können unangenehme Verbrühungen, wenn sich beispielsweise gerade eine Hand einer Bedienungsperson unterhalb oder in Nähe des zweiten Siebes 16 befindet, vermieden werden. Erst dann, wenn der Siebkorbträger 1 seine ordnungsgemäße Schließstellung erreicht hat, wobei der erste Hebel 36 um den Winkel A verdreht werden muß und gleichzeitig der zweite Hebel 45 in seine Offenstellung gebracht wurde, kann heißes Wasser über die Ventileinrichtung 19 austreten, allerdings dann nur noch über die nach außen abgeschirmte Brühkammer 8.

Bei der mit der Venitleinrichtung 19 gekoppelten Hebelanordnung 36, 45 gemäß den Fign. 1 und 4 bis 6 werden beide Hebel 36, 45 zur Erlangung der Offenstellung der Ventileinrichtung 19 entgegen dem Uhrzeigersinn gedreht.

Bei der in den Fign. 2 und 7 bis 10 dargestellten Ausführungsform einer zweiter Ventileinrichtung 19 mit den dazugehörigen Hebeln 36, 45 wird, wie bei der Ventileinrichtung 19 nach Fig. 1, der Siebkorbträger 1 in einen mit Rechtsgewinde versehenen Bajonettverschluß eingedreht, also ebenfalls entgegen dem Uhrzeigersinn. Nach Fig. 2 wird der zweite Hebel 45 zum Herstellen eines Espressos von seiner die Ventileinrichtung 19 verschließenden in seine die Ventileinrichtung 19 öffnende Stellung im Uhrzeigersinn, also entgegengesetzt dem ersten Hebel 36, verdreht. Der zweite Hebel 45 nimmt also nicht die nach Fig. 4 angezeigte Ausgangsstellung ein, sondern er nimmt als Ausgangsstellung die dort gezeigte Endstellung auf der Mittellinie 89 ein. Der Einfachheit halber wurde aber für das zweite Ausführungsbeispiel eine entsprechend dem ersten Ausführungsbeispiel nach Fig. 4 dargestellte Zeichnung nicht erstellt. In den Fign. 7 bis 10 sind die vier möglichen Stellungen der beiden Hebel 36, 45 in Abhängigkeit zueinander dargestellt.

In den Fign. 2 und 10 ist der Siebkorbträger 1 nicht in die Siebkorbhalteeinrichtung 2 eingesetzt und der zweite Hebel 45 befindet sich in seiner ausschließlich zum Erzeugen von Dampf dienenden Ausgangsstellung. In dieser Stellung hat der Ventilkolben 22 mittels der Vorspannkraft der Druckfeder 30 über den ersten Schenkel 65 den ersten Hebel 36 um das Maß (a) nach oben angehoben, da der zweite Schenkel 68 des zweiten Hebels 45 in seiner Ausgangsstellung steht und nicht auf den ersten Schenkel 65 einwirkt. In dieser Stellung kann also nur, wie bereits im ersten Ausführungsbeispiel beschrieben, Dampf erzeugt werden.

Wird nun nach Fig. 9 der zweite Hebel 45 im Uhrzeigersinn, also von seiner Stellung gemäß Fig. 10 nach links in die Stellung gemäß Fig. 9 gedreht, so schlägt die zweite Rampe 35 gerade an der ersten Rampe 34 an, ohne dabei den ersten Schenkel 65 und somit den ersten Hebel 36 nach Fig. 9 nach unten mit dem Ventilkolben 22 zu verschieben. Obwohl also der zweite Hebel 35 in seiner zum Herstellen von Espresso dienenden Endstellung steht, kann kein Espresso hergestellt werden, da der Siebkorbträger 1 nicht in der Siebkorbhalteeinrichtung 2 eingesetzt ist. In dieser Stellung kann wiederum nur Dampf erzeugt werden.

Nimmt in Fig. 8 der zweite Hebel 45 seine Ausgangsstellung ein, wie dies auch in Fig. 10 der Fall ist, und wird der Siebkorbträger 1 in die Siebkorbhalteeinrichtung 2 ordnungsgemäß eingesetzt, so nimmt er den ersten Hebel 36 entgegen dem Uhrzeigersinn nach Fig. 1, also nach Fig. 8 nach rechts mit. Da aber der erste Hebel 36 aufgrund des in der Ausgangsstellung befindlichen zweiten Hebels 45 von diesem nicht beaufschlagt wird, gleitet seine Begrenzungswand 67 auf der konvexen Gleitbahn 42 des Ventilkolbens 22 entlang, ohne daß der erste Hebel 36 und somit der Ventilkolben 22 um das Maß (a) gemäß Fig. 8 nach unten verschoben werden. Auch in dieser Stellung kann nur Dampf erzeugt werden.

Befindet sich der zweite Hebel 45 durch Verdrehung nach links gemäß Fig. 7 in seiner zum Herstellen von Espresso dienenden Stellung, die auch der Stellung nach Fig. 9 entspricht, und wird nun der Siebkorbträger 1 in die Siebkorbhalteeinrichtung 2 eingesetzt und in seine Schließstellung verdreht, so schlägt, gleichermaßen wie in Fig. 1 dargestellt, die am Vorsprung 11 ausgebildete Mitnehmerfläche 85 am freien Ende 40 des ersten Hebels 36 an und verschwenkt ihn entgegen dem Uhrzeigersinn, also in Fig. 7 nach rechts. Dabei schlägt zunächst seine Rampe 34 an der Rampe 35 an, genauso wie dies in Fig. 9 der Fall ist. Bei weiterer Verdrehung des ersten Hebels 36 wird dieser um das Maß (a) zum gehäusefesten Deckel 23 hin verschoben und schiebt dabei den Ventilkolben 22 in die Ventilbohrung hinein. Dabei hebt gemäß Fig. 2 der Kegelstumpf 63 mit seinem Dichtsitz 32 von dem Dichtsitz 30 ab und gibt die erste Leitung 26 zur Verteilerkammer 61 frei. Nun kann heißes Wasser von dem Druckbehälter in die Brühkammer 8 einströmen und, falls Espressomehl in der Brühkammer 8 vorhanden ist, auch ein Espresso hergestellt werden.

Wird nach Fig. 7 einer der beiden Hebel 36, 45 wieder in seine Ausgangsstellung zurückbewegt, so verschiebt der Ventilkolben 22 durch die Kraft der Feder den ersten Hebel 36 um das Maß (a) nach oben und die Ventileinrichtung 19 wird wiederum verschlossen. Damit die beiden Schenkel 65, 68 nicht aus dem Wirkungsbereich des Ventilkolbens 22 vollständig herausgedreht werden können, sind die Drehbewegungen beider Hebel 36, 45 durch in der Zeichnung nicht dargestellte Anschläge begrenzt. Damit der erste Hebel 36 stets sicher sich um das Maß (a) zurückbewegt, was normalerweise durch die Feder 30 und die erste Rampe 34 bezweckt wird, kann zusätzlich noch eine direkt am ersten Hebel 36 angreifende Druck- oder Zugfeder vorgesehen sein.

## Patentansprüche

1. Espressomaschine mit einem elektrisch beheizbaren Wassererhitzer, mit einer Siebkorbhalteeinrichtung (2), die durch Einsetzen eines Siebkorbträgers (1) dichtend verschlossen werden kann, wobei der Siebkorbträger (1) durch ein Sieb (5) in eine mit Kaffeemehl füllbare Brühkammer (8) und in eine an seinem Boden (3) angeordnete Ausgießeinrichtung (4) aufgeteilt ist und wobei die Brühkammer (8) mit dem Wassererhitzer über eine in die Siebkorbhalteeinrichtung (2) mündende erste Leitung (26) verbindbar ist, in der ein die Durchflußsteuerung regelndes Ventil (19) angeordnet ist, das bei nicht eingesetztem Siebkorbträger (1) stets geschlossen ist, wobei nach Einsetzen des Siebkorbträgers (1) dieser bewirkt, daß das Ventil (19) von seiner Schließstellung in seine Offenstellung gelangt, wobei zwischen dem Siebkorbträger (2) und dem Ventil (19) ein erstes Betätigungsglied (36) ausgebildet ist, welches vom Siebkorbträger (1) zur Steuerung des Ventils (19) betätigt wird, und wobei der Espressomaschine über eine mit einem Dampfauslaß versehene zweite Leitung zur Erwärmung und Aufschäumung von Getränken Dampf entnommen werden kann, wobei auch der Dampf im Wassererhitzer erzeugt wird,
**dadurch gekennzeichnet,**
daß zusätzlich zum ersten Betätigungsglied (36) ein zweites, ebenfalls zur Steuerung des Ventils (19) dienendes Betätigungsglied (45) vorhanden ist und daß das Ventil (19) sich nur öffnet, wenn sowohl das erste (36) als auch das zweite Betätigungsglied (45) in ihrer Offenstellung stehen.

2. Espressomaschine nach Anspruch 1,
**dadurch gekennzeichnet,**
daß das Einsetzen des Siebkorbträgers (1) durch eine zur Siebkorbhalteeinrichtung (2) hin gerichtete axiale Verschiebung erfolgt, daß das erste Betätigungsglied (36) von einem Kipphebel gebildet wird, dessen eines Ende durch die beim Verschließen der Siebkorbhalteeinrichtung (2) durch den Siebkorbträger (1) auftretende axiale Verschiebung derart um seinen Lagerpunkt geschwenkt wird, daß dabei ein am Kipphebel ausgebildetes Betätigungselement das Ventil (19) öffnet.

3. Espressomaschine nach Anspruch 1,
**dadurch gekennzeichnet,**
daß das Einsetzen des Siebkorbträgers (1) dadurch erfolgt, daß er mittels Vorsprünge (11) in ein Gewinde oder in einen Bajonettverschluß (12) eingedreht wird, daß das erste Betätigungsglied (36) von einem um eine Achse (38) drehbaren ersten Hebel gebildet wird, dessen freies Ende (40) durch die Schließbewegung des Siebkorbträgers (1) derart um seine Achse (38) gedreht wird, daß dabei ein am ersten Hebel (36) ausgebildetes erstes Betätigungselement (34) das Ventil (19) öffnet.

4. Espressomaschine nach Anspruch 3,
**dadurch gekennzeichnet,**
daß das freie Ende (40) des ersten Hebels (36) in eine beim Ansetzen des Siebkorbträgers (1) an ihm ausgebildete Ausnehmung eingreift.

5. Espressomaschine nach Anspruch 3,
**dadurch gekennzeichnet,**
daß an dem Siebkorbträger (1) als Mitnehmer für das freie Ende (40) des ersten Hebels (36) ein Vorsprung (11) ausgebildet ist, daß an dem ersten Hebel (36) eine Feder angreift, die den ersten Hebel in seine das Ventil schließende Ausgangsstellung selbsttätig zurückbewegt, wenn der Siebkorbträger (1) von der Siebkorbhalteeinrichtung (2) gelöst wird.

6. Espressomaschine nach Anspruch 3,
**dadurch gekennzeichnet,**
daß das Ventil (19) von einem im Gehäuse der Siebkorbhalteeinrichtung (2) axial verschiebbaren Ventilkolben (22) und von einem vom Ventilkolben (22) öffnenden bzw. schließenden Ventilsitz (33) gebildet wird, daß der Ventilkolben (22) von einer Feder (30) zum Zwecke des selbsttätigen Öffnens des Ventils (19) beaufschlagt ist, daß der Ventilkolben (22) mit seinem freien Ende (42) aus dem Gehäuse der Siebkorbhalteeinrichtung (2) herausragt und gegenüber dem Gehäuse gedichtet ist, daß bei geschlossenem Ventil (19) das am ersten Hebel (36) ausgebildete erste Betätigungselement (34) am freien Ende (42) des Kolbens (22) anliegt und diesen gegen den in der Siebkorbhalteeinrichtung (2) ausgebildeten Ventilsitz (33) drückt, während zur Öffnung des Ventils (19) das freie Ende (42) des ersten Hebels (36) durch den Siebkorbträger (1) derart verdreht wird, daß das erste Betätigungselement (34) aus dem Wirkungsbereich des Ventilkolbens (22) gelangt und dabei der Ventilkolben (22) vom Ventilsitz (33) abhebt.

7. Espressomaschine nach Anspruch 6,
**dadurch gekennzeichnet,**
daß der an dem freien Ende (42) des Ventilkolbens (22) zugewandte Bereich des Betätigungselementes (34) am ersten Hebel (36) eine als erste Rampe (34) ausgebildete Gleitbahn ist und daß die erste Rampe (34) in Schließrichtung des Siebkorbträgers (1) ihren Abstand zum freien Ende (42) des Ventilkolbens (22) vergrößert.

8. Espressomaschine nach Anspruch 7,
**dadurch gekennzeichnet,**
daß sich an die erste Rampe (34) zu beiden Seiten eine senkrecht zur Längsachse (39) des Ventilkolbens (22) verlaufende Gleitbahn in Form von Anschlagflächen (70, 71) anschließt und daß die beiden horizontal verlaufenden Anschlagflächen (70, 71) innerhalb des Schließwinkels (A) des Siebkorbträgers (1) liegen.

9. Espressomaschine nach Anspruch 8,
**dadurch gekennzeichnet,**
daß der erste Hebel (36) im wesentlichen senkrecht zur Längsachse (39) des Ventilkolbens (22) und der Achse (38) des ersten Hebels (36) verläuft, daß das zum Siebkorbträger (1) verlaufende freie Ende (40) des ersten Hebels (36) gegenüber dem horizontal verlaufenden Bereich des ersten Hebels (36) abgewinkelt ist und sich parallel zur Längsachse (39) des Kolbens (22) und der Achse (38) des ersten Hebels (36) erstreckt und daß das freie Ende (40) mit einem am Siebkorbträger (1) ausgebildeten Anschlag (11) in Wirkverbindung bringbar ist, der radial außerhalb einer an der Siebkorbhalteeinrichtung (2) ausgebildeten Dichtverbindung (14) am Siebkorbträger (1) angeordnet ist.

10. Espressomaschine nach Anspruch 9,
**dadurch gekennzeichnet,**
daß der Siebkorbträger (1) mit der Siebkorbhalteeinrichtung (2) durch einen Bajonettverschluß (11, 12) verbindbar ist und daß das siebkorbhalterseitige Bajonettverschlußteil (11) den Anschlag (85) für das freie Ende (40) des ersten Hebels (36) bildet.

11. Espressomaschine nach Anspruch 1,
**dadurch gekennzeichnet,**
daß das erste (36) und zweite Betätigungsglied (45) ein mit dem Ventil (19) in Kontakt bringbares erstes (34) bzw. zweites Betätigungselement (35) aufweist, daß das Einsetzen des Siebkorbträgers (1) dadurch erfolgt, daß er mittels Vorsprünge (11) in ein Gewinde oder in einen Bajonettverschluß (12) eindrehbar ist, daß das erste (36) und zweite Betätigungsglied (45) von einem um eine erste Achse (38) drehbaren ersten (36) und zweiten Hebel (45) gebildet wird, daß das Ventil (19) von einem im Gehäuse der Siebkorbhalteeinrichtung (2) axial verschiebbaren Ventilkolben (22) und von einem vom Ventilkolben (22) öffnenden bzw. schließenden Ventilsitz (33) gebildet wird, daß der Ventilkolben (22) von einer Feder (30) zum Zwecke des selbsttätigen Öffnens des Ventils (19) beaufschlagt ist, daß der Ventilkolben (22) an seinem freien Ende (42) von je einem am ersten (36) und zweiten Hebel (35) ausgebildeten ersten (34) und zweiten Betätigungselement (35) beaufschlagbar ist, daß das Ventil (19) gegenüber dem Gehäuse der Siebkorbhalteeinrichtung (2) gedichtet ist, daß bei geschlossenem Ventil (19) das erste (34) und/oder das zweite Betätigungselement (35) am freien Ende (42) des Ventilkolbens (22) mit Vorspannung anliegen, während sich zur Öffnung des Ventils (19) das erste (34) und zweite Betätigungselement (35) außerhalb des Wirkungsbereiches des freien Endes (42) des Ventilkolbens (22) befinden, indem das freie Ende (40) des ersten Hebels (36) durch den Siebkorbträger (1) verdreht wird und indem das zweite Betätigungselement (35) durch Verdrehung ebenfalls aus dem Wirkungsbereich des Ventilkolbens (22) gelangt.

12. Espressomaschine nach Anspruch 11,
**dadurch gekennzeichnet,**
daß der an dem freien Ende (42) des Ventilkolbens (22) zugewandte Bereich sowohl am ersten (34) wie am zweiten Betätigungselement (35) eine als Rampe ausgebildete erste (34) bzw. zweite Gleitbahn (35) ist und daß sich der Abstand der ersten (34) und zweiten (35) Gleitbahn in Schließrichtung des Siebkorbträgers (1) gegenüber dem freien Ende (42) des Ventilkolbens (22) vergrößert.

13. Espressomaschine nach Anspruch 11,
**dadurch gekennzeichnet,**
daß die erste (34) und zweite Rampe (35) in Schließstellung des ersten (36) und zweiten Hebels (45) im wesentlichen in der gleichen Ebene und parallel zueinander verlaufen.

14. Espressomaschine nach Anspruch 13,
**dadurch gekennzeichnet,**
daß der zweite Hebel (45) auf einer am ersten Hebel (36) ausgebildeten zweiten Achse (44) drehbar gelagert ist und daß die Rampen (34, 35) des ersten (36) und zweiten Hebels (45) konzentrisch zueinander und, dem freien Ende (42) des Ventilkolbens (22) gegenüberliegend und von der ersten Achse (38) aus gesehen, radial hintereinander verlaufen.

15. Espressomaschine nach Anspruch 13,
**dadurch gekennzeichnet,**
daß der zweite Hebel (45) von Hand betätigbar ist.

16. Espressomaschine nach Anspruch 11,
**dadurch gekennzeichnet,**
daß die erste Achse (38) von einem Zapfen gebildet wird, auf der der erste Hebel (36) über eine erste Bohrung (37) gelagert ist und daß der erste Hebel (36) an der Außenwandung (44) der ersten Bohrung (37) eine zylindrische Mantelfläche aufweist, auf der über eine am zweiten Hebel (45) ausgebildete zweite Bohrung (46) der zweite Hebel (45) gelagert ist.

17. Espressomaschine nach Anspruch 16,
**dadurch gekennzeichnet,**
daß der Abstand zwischen der zweiten Rampe (35) des zweiten Hebels (45) und der ersten Achse (38) geringer ist als der Abstand zwischen der ersten Rampe (34) des ersten Hebels (36) und der ersten Achse (38).

18. Espressomaschine nach Anspruch 17,
**dadurch gekennzeichnet,**
daß der erste Hebel (36) oberhalb des zweiten Hebels (45) auf der ersten Achse (38) gelagert ist und daß außerhalb des zweiten Hebels (45) im Bereich des Ventilkolbens (22) am ersten Hebel (36) ein das erste Betätigungselement (34) bildender, zum Ventilkolben (22) hin gerichteter erster Vorsprung (43) ausgebildet ist, an dessen dem Ventilkolben (22) zugewandter Stirnfläche die erste Rampe (34) verläuft.

19. Espressomaschine nach Anspruch 1,
**dadurch gekennzeichnet,**
daß das erste (36) und zweite Betätigungsglied (45) ein das Ventil (19) steuerndes erstes (34) bzw. zweites Betätigungselement (35) aufweist, daß das Einsetzen des Siebkorbträgers (1) dadurch erfolgt, daß er mittels Vorsprünge (11) in ein Gewinde oder einen Bajonettverschluß (12) eingedreht wird, daß das erste (36) und zweite Betätigungsglied (45) von einem um eine erste Achse (38) drehbar gelagerten ersten (36) und zweiten Hebel (45) gebildet wird, daß das Ventil (19) von einem im Gehäuse der Siebkorbhalteeinrichtung (2) axial verschiebbaren Ventilkolben (22) und von einem vom Ventilkolben (22) öffnenden bzw. schließenden Ventilsitz (33) gebildet wird, daß der Ventilkolben (22) von einer Feder (30) zum Zwecke des selbsttätigen Schließens des Ventils (19) beaufschlagt ist, daß der Ventilkolben (22) an seinem freien Ende (42) von je einem an dem ersten (36) und zweiten Hebel (45) ausgebildeten ersten (34) und zweiten Betätigungselement (35) beaufschlagbar ist, daß das Ventil (19) gegenüber dem Gehäuse gedichtet ist, daß der erste Hebel (36) zusätzlich zum Ventilkolben (22) hin verschiebbar angeordnet ist, daß, wenn nach Verdrehung eines der beiden Hebel (36, 45) in die zur Öffnung des Ventils (19) dienende Stellung auch der andere Hebel (36, 45) ebenfalls durch Drehung in die zur Öffnung des Ventils (19) dienende Offenstellung gebracht wird, beide Betätigungselemente (34, 35) der Hebel (36, 45) derart aufeinander einwirken, daß der erste Hebel (36) in Öffnungsrichtung des Ventilkolbens (22) auf einer am zweiten Hebel (45) ausgebildeten zweiten Achse (53) verschoben wird und das Ventil (19) dabei öffnet.

20. Espressomaschine nach Anspruch 19,
**dadurch gekennzeichnet,**
daß der dem zweiten Hebel (45) zugewandte Bereich des ersten Betätigungselementes (34) am ersten Hebel (36) eine als erste Rampe (34) ausgebildete erste Gleitbahn ist und daß die erste Rampe (34), in Schließrichtung des Siebkorbträgers (1) gesehen, ein Gefälle aufweist.

21. Espressomaschine nach Anspruch 20,
**dadurch gekennzeichnet,**
daß zusätzlich zu der am ersten Hebel (36) ausgebildeten ersten Rampe (34) an dem dem ersten Hebel (36) zugewandten Bereich des zweiten Hebels (45) eine als zweite Gleitbahn ausgebildete zweite Rampe (35) vorgesehen ist und daß die zweite Rampe (35) im wesentlichen parallel zur ersten Rampe (34) verläuft.

22. Espressomaschine nach Anspruch 20,
**dadurch gekennzeichnet,**
daß der zweite Hebel (45) direkt auf der ersten Achse (38) und der erste Hebel (36) auf einer am zweiten Hebel (45) ausgebildeten zweiten Achse (53) drehbar gelagert ist.

23. Espressomaschine nach Anspruch 20,
**dadurch gekennzeichnet,**
daß zum Öffnen des Ventils (19) beide Hebel (36, 45) die gleiche Drehrichtung aufweisen.

24. Espressomaschine nach den Ansprüchen 21 und 22,
**dadurch gekennzeichnet,**
daß zum Öffnen des Ventils (19) die Drehrichtung des ersten Hebels (36) entgegengesetzt der Drehrichtung des zweiten Hebels (45) ist.

25. Espressomaschine nach den Ansprüchen 18 und 22,
**dadurch gekennzeichnet,**
daß der erste Hebel (36) im wesentlichen senkrecht zur Längsachse (39) des Ventilkolbens (22) und der ersten Achse (38) verläuft, daß das zum Siebkorbträger (1) verlaufende freie Ende (40) des ersten Hebels (36) gegenüber dem horizontal verlaufenden Bereich des ersten Hebels (36) abgewinkelt ist und sich parallel zur Längsachse (39) des Kolbens (22) und der ersten Achse (38) erstreckt und daß das freie Ende (40) mit einem am Siebkorbträger (1) ausgebildeten Anschlag (85) in Wirkverbindung bringbar ist, der radial außerhalb einer an der Siebkorbhalteeinrichtung (2) ausgebildeten Dichtverbindung (14) am Siebkorbträger (1) angeordnet ist.

26. Espressomaschine nach Anspruch 1,
**dadurch gekennzeichnet,**
daß im oder nach dem Ventil (19) zur Brühkammer (8) hin eine als Reduzierventil arbeitende Drossel (84) in der ersten Leitung (26) angeordnet ist.

27. Espressomaschine nach Anspruch 24,
**dadurch gekennzeichnet,**
daß der Öffnungsquerschnitt des Ventils (19) so groß bemessen ist, daß er selbst die Drossel bildet.

## Claims

1. An espresso coffee machine with an electrically heatable water heater, with a filter basket holding device (2) which can be sealingly closed by introducing therein a filter basket holder (1), the said filter basket holder (1) being subdivided by a filter (5) into a brewing chamber (8) that can be filled with coffee grounds and a pouring device (4) arranged at its bottom (3), and wherein the brewing chamber (8) is connectible to the water heater by a first duct (26) opening into the filter basket holding device (2), in which a throughflow controlling valve (19) is arranged which is always closed when the filter basket holder (1) is not inserted, wherein, after the insertion of the filter basket holder (1), the latter causes the valve (19) to move from its closed into its open position, wherein a first actuating member (36) is provided between the filter basket holder (1) and the valve (19) which is actuated by the filter basket holder (1) to control the valve (19), and wherein steam can be taken from the espresso coffee machine through a second duct provided with a steam outlet in order to heat and froth beverages, the said steam being produced in the water heater as well,
characterized in that, in addition to the first actuating member (36), a second actuating member (45) is provided which also serves to control the valve (19), and in that the valve (19) opens only if both the first (36) and the second actuating member (45) have adopted their open position.

2. An espresso coffee machine as claimed in claim 1,
characterized in that the insertion of the filter basket holder (1) is performed by an axial displacement directed towards the filter basket holding device (2), in that the first actuating member (36) is a turning lever, the one end of which is so tilted about its point of support due to the axial displacement which occurs when the filter basket holding device (2) is closed by the filter basket holder (1) that an actuating element formed at the turning lever opens the valve (19).

3. An espresso coffee machine as claimed in claim 1,
characterized in that the filter basket holder (1) is inserted in that it is turned by means of projections (11) into a thread or a bayonet lock arrangement (12), in that the first actuating member (36) is a first lever rotatable about an axis (38), whose free end (40) is rotated about its axis (38) by the closing movement of the filter basket holder (1) in such a manner that a first actuating element (34) formed at the first lever (36) opens the valve (19).

4. An espresso coffee machine as claimed in claim 3,
characterized in that, when the filter basket holder (1) is inserted, the free end (40) of the first lever (36) is engaged into a recess which is shaped at it.

5. An espresso coffee machine as claimed in claim 3,
characterized in that a projection (11) is provided on the filter basket holder (1) as an entraining means for the free end (40) of the first lever (36), in that a spring makes catch at the first lever (36), which automatically returns the first lever into its initial position closing the valve when the filter basket holder (1) is detached from the filter basket holding device (2).

6. An espresso coffee machine as claimed in claim 3,
characterized in that the valve (19) is formed of a valve piston (22), which is axially slidable in the housing of the filter basket holding device (2), and a valve seat (33) to be opened and closed, respectively, by the valve piston (22), in that the valve piston (22) is acted upon by a spring (30) for the purpose of automatic opening of the valve (19), in that the valve piston (22) with its free end (42) projects from the housing of the filter basket holding device (2) and is sealed in relation to the housing, in that, with the valve (19) closed, the first actuating element (34) formed on the first lever (36) abuts on the free end (42) of the piston (22) and presses said against the valve seat (33) formed in the filter basket holding device (2), while, for opening the valve (19), the free end (42) of the first lever (36) is turned by the filter basket holder (1) such that the first actuating element (34) moves out of the range of effect of the valve piston (22) and the valve piston (22) lifts from the valve seat (33).

7. An espresso coffee machine as claimed in claim 6,
characterized in that the area of the actuating element (34) on the first lever (36) facing the free end (42) of the valve piston (22) is a slide designed as a first ramp (34), and in that the first ramp (34) increases its distance from the free end (42) of the valve piston (22) in the closing direction of the filter basket holder (1).

8. An espresso coffee machine as claimed in claim 7,
characterized in that adjacent to the first ramp (34) on both sides is a slide in the form of abutment surfaces (70, 71) which extends perpendicular to the longitudinal axis (39) of the valve piston (22), and in that the two horizontally extending abutment surfaces (70, 71) are disposed within the closing angle (A) of the filter basket holder (1).

9. An espresso coffee machine as claimed in claim 8,
characterized in that the first lever (36) extends substantially perpendicular to the longitudinal axis (39) of the valve piston (22) and the axis (38) of the first lever (36), in that the free end (40) of the first lever (36) extending towards the filter basket holder (1) is angled off in relation to the horizontally extending area of the first lever (36) and extends in parallel to the longitudinal axis (39) of the piston (22) and the axis (38) of the first lever (36), and in that the free end (40) is movable into operative engagement with a stop (11) provided on the filter basket holder (1), which stop is arranged on the filter basket holder (1) radially outside a sealing joint (14) provided on the filter basket holding device (2).

10. An espresso coffee machine as claimed in claim 9,
characterized in that the filter basket holder (1) can be coupled with the filter basket holding device (2) by a bayonet lock arrangement (11, 12), and in that the bayonet lock element (11) on the side of the filter basket holder forms the stop (85) for the free end (40) of the first lever (36).

11. An espresso coffee machine as claimed in claim 1,
characterized in that the first (36) and the second actuating member (45) comprises a first (34) and, respectively, a second actuating element (35) which can be brought into contact with the valve (19), in that the filter basket holder (1) is inserted such that it can be turned by means of projections (11) into a thread or a bayonet lock arrangement (12), in that the first (36) and the second actuating member (45) is a first (36) and a second lever (45) rotatable about a first axis (38), in that the valve (19) is formed of a valve piston (22) axially slidable in the housing of the filter basket holding device (2) and a valve seat (33) to be opened and closed, respectively, by the valve piston (22), in that the valve piston (22) is acted upon by a spring (30) for the purpose of automatic opening of the valve (19), in that the valve piston (22) at its free end (42) is adapted to be acted upon by each one first (34) and second actuating element (35) designed on the first (36) and the second lever (45), in that the valve (19) is sealed in relation to the housing of the filter basket holding device (2), in that, with the valve (19) closed, the first (34) and/or the second actuating element (35) abuts with preload on the free end (42) of the valve piston (22), while, for opening the valve (19), the first (34) and the second actuating element (35) are disposed outside the range of effect of the free end (42) of the valve piston (22) due to the free end (40) of the first lever (36) being turned by the filter basket holder (1), and due to the second actuating element (35), when turned, also moving out of the range of effect of the valve piston (22).

12. An espresso coffee machine as claimed in claim 11,
characterized in that the area on both the first (34) and the second actuating element (35), which area faces the free end (42) of the valve piston (22), is a first (34) and, respectively, a second slide (35) designed as a ramp, and in that the distance of the first (34) and the second (35) slide is increased in relation to the free end (42) of the valve piston (22) in the closing direction of the filter basket holder (1).

13. An espresso coffee machine as claimed in claim 11,
characterized in that the first (34) and the second ramp (35) extend substantially in the same plane and in parallel to each other in the closing position of the first (36) and the second lever (45).

14. An espresso coffee machine as claimed in claim 13,
characterized in that the second lever (45) is pivoted on a second axis (44) arranged on the first lever (36), and in that the ramps (34, 35) of the first (36) and the second lever (45) extend concentrically relative to each other and radially one behind the other, opposed to the free end (42) of the valve piston (22), and when viewed from the first axis (38).

15. An espresso coffee machine as claimed in claim 13,
characterized in that the second lever (45) is operable by hand.

16. An espresso coffee machine as claimed in claim 11,
characterized in that the first axis (38) is formed by a peg, on which the first lever (36) is supported by way of a first bore (37), and in that the first lever (36) comprises a cylindrical peripheral surface on the outside wall (44) of the first bore (37), on which surface the second lever (45) is supported by way of a second bore (46) provided on the second lever (45).

17. An espresso coffee machine as claimed in claim 16,
characterized in that the distance between the second ramp (35) of the second lever (45) and the first axis (38) is less than the distance between the first ramp (34) of the first lever (36) and the first axis (38).

18. An espresso coffee machine as claimed in claim 17,
characterized in that the first lever (36) is supported on the first axis (38) above the second lever (45), and in that, outside the second lever (45) in the area of the valve piston (22), a first projection (43) is formed on the first lever (36) which represents the first actuating element (34), which is directed towards the valve piston (22) and on the end surface of which close to the valve piston (22) the first ramp (34) is provided.

19. An espresso coffee machine as claimed in claim 1,
characterized in that the first (36) and the second actuating member (45) comprises a first (34) and, respectively, a second actuating element (35) controlling the valve (19), in that the filter basket holder (1) is inserted by being turned by way of projections (11) into a thread or a bayonet lock arrangement (12), in that the first (36) and the second actuating member (45) is a first (36) and a second lever (45) pivoted on a first axis (38), in that the valve (19) is formed of a valve piston (22) axially slidable in the housing of the filter basket holding device (2) and a valve seat (33) to be opened and closed, respectively, by the valve piston (22), in that the valve piston (22) is acted upon by a spring (30) for the purpose of automatic closing of the valve (19), in that the valve piston (22) on its free end (42) can be acted upon by each one first (34) and second actuating element (35) designed on the first (36) and the second lever (45), in that the valve (19) is sealed in relation to the housing, in that the first lever (36), additionally, is arranged to be slidable towards the valve piston (22), in that, after one of the two levers (36, 45) has turned into the position serving to open the valve (19) and the other lever (36, 45) is also turned to assume the opening position serving to open the valve (19), both actuating elements (34, 35) of the levers (36, 45) act upon each other such that the first lever (36) is displaced in the opening direction of the valve piston (22) on a second axis (53) arranged on the second lever (45), and opens the valve (19) thereby.

20. An espresso coffee machine as claimed in claim 19,
characterized in that the area of the first actuating element (34) on the first lever (36), which area faces the second lever (45), is a first slide formed as a first ramp (34), and in that the first ramp (34) has a descent, when viewed in the closing direction of the filter basket holder (1).

21. An espresso coffee machine as claimed in claim 20,
characterized in that, in addition to the first ramp (34) provided on the first lever (36), a second ramp (35) designed as a second slide is provided on the area of the second lever (45) facing the first lever (36), and in that the second ramp (35) extends substantially in parallel to the first ramp (34).

22. An espresso coffee machine as claimed in claim 20,
characterized in that the second lever (45) is pivoted directly on the first axis (38), and the first lever (36) is pivoted on a second axis (53) arranged on the second lever (45).

23. An espresso coffee machine as claimed in claim 20,
characterized in that, for opening the valve (19), both levers (36, 45) have the same direction of rotation.

24. An espresso coffee machine as claimed in claims 21 and 22,
characterized in that, for opening the valve (19), the direction of rotation of the first lever (36) is opposite to the direction of rotation of the second lever (45).

25. An espresso coffee machine as claimed in claims 18 and 22,
characterized in that the first lever (36) extends substantially perpendicular to the longitudinal axis (39) of the valve piston (22) and the first axis (38), in that the free end (40) of the first lever (36) extending towards the filter basket holder (1) is angled off in relation to the horizontally extending area of the first lever (36) and extends in parallel to the longitudinal axis (39) of the piston (22) and the first axis (38), and in that the free end (40) is movable into operative engagement with a stop (85) provided on the filter basket holder (1), which stop is arranged on the filter basket holder (1) radially outside a sealing joint (14) provided on the filter basket holding device (2).

26. An espresso coffee machine as claimed in claim 1,
characterized in that a throttle (84) operating as a reducing valve is arranged in the first duct (26) in the valve (19) or downstream thereof towards the brewing chamber (8).

27. An espresso coffee machine as claimed in claim 24,
characterized in that the opening cross-section of the valve (19) is sized so large that it forms the throttle itself.

## Revendications

1. Machine à café du type "express", comprenant un chauffe-eau qui peut être chauffé par piste électrique, comprenant un dispositif de support (2) pour des tamis, qui peut être refermé de façon étanche par mise en place d'un porte-tamis (1), le porte-tamis (1) étant subdivisé par un tamis (5) en une chambre d'infusion (8) qui peut être remplie de poudre de café et en un dispositif de déversement (4) agencé dans son fond (3), la chambre d'infusion (8) pouvant être reliée au chauffe-eau via une première conduite (26) qui débouche dans le dispositif de support (2) des tamis, dans laquelle est agencée une valve (19) qui régule la commande d'écoulement, cette valve étant constamment fermée lorsque le porte-tamis (1) n'est pas en place, et après mise en place du porte-tamis (1), celui-ci assure le passage de la valve (19) depuis sa position de fermeture dans sa position d'ouverture, un premier organe d'actionnement (36) étant réalisé entre le porte-tamis (2) et la valve (19), cet organe d'actionnement étant actionné par le porte-tamis (1) afin de commander la valve (19), et de la vapeur pouvant être prélevée de la machine express par une seconde conduite pourvue d'une sortie de vapeur, afin de réchauffer et de faire mousser des boissons, la vapeur étant également produite dans le chauffe-eau,
caractérisée en ce que
il est prévu en plus du premier organe d'actionnement (36) un second organe d'actionnement (45) qui sert également à la commande de la valve (19), et en ce que la valve (19) ne s'ouvre que lorsque tant le premier organe d'actionnement (36) que le second organe d'actionnement (45) se trouvent dans leur position d'ouverture.

2. Machine express selon la revendication 1, caractérisée en ce que la mise en place du porte-tamis (1) est assurée par un déplacement axial dirigé vers le dispositif de support (2) des tamis, en ce que le premier organe d'actionnement (36) est formé par un levier basculant dont l'une des extrémités est basculée autour de son point de montage à cause du déplacement axial qui se produit lors de la fermeture du dispositif de support (2) des tamis par le porte-tamis (1), de telle manière qu'un élément d'actionnement réalisé sur le levier basculant ouvre alors la valve (19).

3. Machine express selon la revendication 1, caractérisée en ce que la mise en place du porte-tamis (1) est assurée par le fait qu'il est tourné au moyen de saillies (11) à l'intérieur d'un taraudage ou dans une fermeture à baïonnette (12), en ce que le premier élément d'actionnement (36) est formé par un premier levier capable de tourner autour d'un axe (38), dont l'extrémité libre (40) est tournée autour de son axe (38) à cause du mouvement de fermeture du porte-tamis (1), de telle manière qu'un premier élément d'actionnement (34) réalisé sur le premier levier (36) ouvre alors la valve (19).

4. Machine express selon la revendication 3, caractérisée en ce que l'extrémité libre (40) du premier levier (36) s'engage dans un évidement formé dans le porte-tamis (1) lors de la mise en place de ce dernier.

5. Machine express selon la revendication 3, caractérisée en ce qu'une saillie (11) est réalisée sur le porte-tamis (1) en tant qu'élément d'entraînement pour l'extrémité libre (40) du premier levier (36), en ce qu'un ressort attaque le premier levier (36), ledit ressort ramenant automatiquement le premier levier dans sa position de départ qui referme la valve, lorsque le porte-tamis (1) est détaché du dispositif de support (2) des tamis.

6. Machine express selon la revendication 3, caractérisée en ce que la valve (19) est formée par un opercule de valve (22) mobile axialement dans le boîtier du dispositif de support (2) des tamis, et par un siège de valve (33) ouvert ou fermé par l'opercule de valve (22), en ce que l'opercule de valve (22) est sollicité par un ressort (30) afin d'ouvrir automatiquement la valve (19), en ce que l'opercule (22) dépasse par son extrémité libre (42) hors du boîtier du dispositif de support (2) des tamis et est étanché par rapport au boîtier, en ce que lorsque la valve (19) est fermée le premier élément d'actionnement (34) réalisé sur le premier levier (36) est en contact contre l'extrémité libre (42) de l'opercule de valve (22) et repousse celui-ci contre le siège de valve (33) réalisé dans le dispositif de support (2) des tamis, tandis que pour ouvrir la valve (19) l'extrémité libre (42) du premier levier (36) est tournée par le porte-tamis (1) de telle manière que le premier élément d'actionnement (34) arrive hors de la région d'action de l'opercule de valve (22) et soulève alors l'opercule de valve (22) du siège de valve (33).

7. Machine express selon la revendication 6, caractérisée en ce que la région de l'élément d'actionnement (34) sur le premier levier (36), dirigée vers l'extrémité libre (42) de l'opercule de valve (22) est une piste de coulissement réalisée sous la forme d'une première rampe (34), et en ce que la première rampe (34) présente vis-à-vis de l'extrémité libre (42) de l'opercule de valve (22) une distance qui augmente dans la direction de fermeture du porte-tamis (1).

8. Machine express selon la revendication 7, caractérisée en ce qu'une piste de coulissement, sous la forme de surfaces de butée (70, 71), s étendant perpendiculairement à l'axe longitudinal (39) de l'opercule de valve (22) se raccorde des deux côtés à la première rampe (34), et en ce que les deux surfaces de butée (70, 71) qui s'étendent horizontalement sont situées à l'intérieur de l'angle de fermeture (A) du porte-tamis (1).

9. Machine express selon la revendication 8, caractérisée en ce que le premier levier (36) s'étend sensiblement perpendiculairement à l'axe longitudinal (39) de l'opercule de valve (22) et à l'axe (38) du premier levier (36), en ce que l'extrémité libre (40) du premier levier (36) qui s'étend en direction du porte-tamis (1), est coudée par rapport à la région du premier levier (36) qui s'étend horizontalement, et s'étend parallèlement à l'axe longitudinal (39) de l'opercule (22) et à l'axe (38) du premier levier (36), et en ce que l'extrémité libre (40) peut être amenée en coopération avec une butée (11) réalisée sur le porte-tamis (1), cette butée (11) étant agencée sur le porte-tamis à l'extérieur d'une liaison étanche (14) réalisée sur le dispositif de support (2) des tamis.

10. Machine express selon la revendication 9, caractérisée en ce que le porte-tamis (1) peut être relié au dispositif de support (2) des tamis au moyen d'une fermeture à baïonnette (11, 12), et en ce que la partie (11) de la fermeture à baïonnette située du côté du porte-tamis forme la butée (85) pour l'extrémité (40) du premier levier (36).

11. Machine express selon la revendication 1, caractérisée en ce que le premier organe d'actionnement (36) et le second organe d'actionnement (45) comportent un premier élément d'actionnement (34) et un second élément d'actionnement (35) respectif qui peut être amené en contact avec la valve (19), en ce que la mise en place du porte-tamis (1) est assurée par le fait qu'il peut être introduit en tournant au moyen de saillies (11) dans un taraudage ou dans une fermeture à baïonnette (12), en ce que le premier organe d'actionnement (36) et le second organe d'actionnement (45) sont formés par un premier levier (36) et un second levier (45) capables de tourner autour d'un premier axe (38), en ce que la valve (19) est formée par un opercule de valve (22) mobile axialement dans le boîtier du dispositif de support (2) des tamis et par un siège de valve (33) qui est ouvert ou fermé par l'opercule de valve (22), en ce que l'opercule de valve (22) est sollicité par un ressort (30) dans le but d'ouvrir automatiquement la valve (19), en ce que l'opercule de valve (22) peut être sollicité à son extrémité libre (42) par un premier élément d'actionnement (34) et un second élément d'actionnement (35) réalisés sur le premier levier (36) et le second levier (35), en ce que la valve (19) est étanchée vis-à-vis du boîtier du dispositif de support (2) des tamis, en ce que lorsque la valve est fermée (19) le premier élément d'actionnement (34) et/ou le second élément d'actionnement (35) sont appliqués sous précontrainte contre l'extrémité libre (42) de l'opercule de valve (22), tandis que pour l'ouverture de la valve (19) le premier élément d'actionnement (34) et le second élément d'actionnement (35) sont situés à l'extérieur de la zone d'action de l'extrémité libre (42) de l'opercule de valve (22), en tournant l'extrémité libre (40) du premier levier (36) au moyen du porte-tamis, et par le fait que le second élément d'actionnement (35) parvient également hors de la zone d'action de l'opercule de valve (22) par rotation.

12. Machine express selon la revendication 11, caractérisée en ce que la région dirigée vers l'extrémité (42) de l'opercule de valve (22) est tant sur le premier élément d'actionnement (34) que sur le second élément d'actionnement (35) une première piste de glissement (34) ou respectivement une seconde piste de glissement (35) réalisée sous la forme d'une rampe, et en ce que la distance de la première piste de coulissement (34) et la seconde piste de coulissement (35) par rapport à l'extrémité libre (42) de l'opercule de valve (22) augmente dans la direction de fermeture du porte-tamis (1).

13. Machine express selon la revendication 11, caractérisée en ce que la première rampe (34) et la seconde rampe (35) s'étendent sensiblement dans le même plan et parallèlement l'une à l'autre dans la direction de fermeture du premier levier (36) et du second levier (45).

14. Machine express selon la revendication 13, caractérisée en ce que le second levier (45) est monté en rotation sur un second axe (44) réalisé sur le premier levier (36), et en ce que les rampes (34, 35) du premier levier (36) et du second levier (45) sont concentriques l'une à l'autre et s'étendent radialement l'une derrière l'autre, en étant vues à l'opposé de l'extrémité libre (42) de l'opercule de valve (22) et depuis le premier axe (38).

15. Machine express selon la revendication 13, caractérisée en ce que le second levier (45) peut être actionné à la main.

16. Machine express selon la revendication 11, caractérisée en ce que le premier axe (38) est formé par une broche sur laquelle est monté le premier levier (36) par l'intermédiaire d'un premier perçage (37), et en ce que le premier levier (36) comporte sur la paroi extérieure (44) du premier perçage (37) une surface enveloppe cylindrique sur laquelle est montée le second levier (45) au moyen d'un second perçage (46) réalisé sur le second levier (45).

17. Machine express selon la revendication 16, caractérisée en ce que la distance entre la seconde rampe (35) du second levier (45) et le premier axe (38) est inférieure à la distance entre la première rampe (34) du premier levier (36) et le premier axe (38).

18. Machine express selon la revendication 17, caractérisée en ce que le premier levier (36) est monté sur le premier axe (38) au-dessus du second levier (45), et en ce qu'une première saillie (43) dirigée vers l'opercule de valve (22) et formant le premier élément d'actionnement (34) est réalisée sur le premier levier (36) à l'extérieur du second levier (45) dans la région de l'opercule de valve (22), la première rampe (34) s étendant sur la surface frontale de ladite première saillie (43) orientée vers l'opercule de valve (22).

19. Machine express selon la revendication 1, caractérisée en ce que le premier organe d'actionnement (36) et le second organe d'actionnement (45) comportent respectivement un premier élément d'actionnement (34) et un second élément d'actionnement (35) qui commandent la valve (19), en ce que la mise en place du porte-tamis (1) est assurée par le fait qu'il est introduit en tournant au moyen de saillies (11) dans un taraudage ou dans une fermeture à baïonnette (12), en ce que le premier organe d'actionnement (36) et le second organe d'actionnement (45) sont formés par un premier levier (36) et un second levier (45) montés en rotation autour d'un premier axe (38), en ce que la valve (19) est formée par un opercule de valve (22) mobile axialement dans le boîtier du dispositif de support (2) des tamis et par un siège de valve (33) qui est ouvert ou fermé par l'opercule de valve (22), en ce que l'opercule de valve (22) est sollicité par un ressort (30) dans le but de fermer automatiquement la valve (19), en ce que l'opercule de valve (22) peut être sollicité à son extrémité libre (42) par un premier élément d'actionnement (34) et un second élément d'actionnement (35) réalisés sur le premier levier (36) et le second levier (45) respectivement, en ce que la valve (19) est étanchée vis-à-vis du boîtier, en ce que le premier levier (36) est de plus agencé de manière à pouvoir être déplacé en direction de l'opercule de valve (22), en ce qu'après rotation de l'un des deux leviers (36, 45) dans la position qui sert à l'ouverture de la valve (19) l'autre levier (36, 45) est également amené par rotation dans la position d'ouverture qui sert à l'ouverture de la valve (19), les deux éléments d'actionnement (34, 35) des leviers (36, 45) agissent l'un sur l'autre de telle manière que le premier levier (36) est déplacé dans la direction d'ouverture de l'opercule de valve (22) vers un deuxième axe (53) réalisé sur le second levier (45) et ouvre alors la valve (19).

20. Machine express selon la revendication 19, caractérisée en ce que la région du premier élément d'actionnement (34) sur le premier levier (36), orientée vers le second levier (45), est une première piste de coulissement réalisée sous la forme d'une première rampe (34) et en ce que la première rampe (34) présente une pente, vue dans la direction de fermeture du porte-tamis (1).

21. Machine express selon la revendication 20, caractérisée en ce que, en plus de la première rampe (34) réalisée sur le premier levier (36) une seconde rampe (35) réalisée sous la forme d'une seconde piste de coulissement, est prévue dans la région du second levier (45) tournée vers le premier levier (36), et en ce que la seconde rampe (35) s'étend sensiblement parallèlement à la première rampe (34).

22. Machine express selon la revendication 20, caractérisée en ce que le second levier (45) est monté en rotation directement sur le premier axe (38), et le premier levier (36) est monté en rotation sur un second axe (53) réalisé sur le second levier (45).

23. Machine express selon la revendication 20, caractérisée en ce que les deux leviers (36, 45) ont la même direction de rotation pour l'ouverture de la valve (19).

24. Machine express selon les revendications 21 et 22, caractérisée en ce que la direction de rotation du premier levier (36) pour ouvrir la valve (19) est opposée à la direction de rotation du second levier (45) pour ouvrir la valve (19).

25. Machine express selon les revendications 18 et 22, caractérisée en ce que le premier levier (36) s'étend sensiblement perpendiculairement à l'axe longitudinal (39) de l'opercule de valve (22) et au premier axe (38), en ce que l'extrémité libre (40) du premier levier (36) qui s'étend vers le porte-tamis (1) est coudée par rapport à la région du premier levier (36) qui s'étend horizontalement, et s'étend parallèlement à l'axe longitudinal (39) de l'opercule (22) et au premier axe (38), et en ce que l'extrémité libre (40) peut être amenée en coopération avec une butée (85) réalisée sur le porte-tamis (1), cette butée étant agencée sur le porte-tamis (1) radialement à l'extérieur d'un raccord étanche (14) réalisé sur le dispositif de support (2) des tamis.

26. Machine express selon la revendication 1, caractérisée en ce qu'un étranglement (84) fonctionnant en tant que valve de réduction est agencé dans la première conduite (26) dans la valve (19), ou après la valve (19) en direction de la chambre d'infusion (8).

27. Machine express selon la revendication 24, caractérisée en ce que la section d'ouverture de la valve (19) est choisie d'une taille telle qu'elle forme elle-même l'étranglement.
